# EUROPÄISCHE PATENTSCHRIFT

(11) **EP 3 058 058 B1**
(45) Veröffentlichungstag und Bekanntmachung des Hinweises auf die Patenterteilung: **14.03.2018**
(21) Anmeldenummer: 14758329.8
(22) Anmeldetag: 26.08.2014
(51) Int. Cl.: C12H 1/22, C12C 11/11

(54) **VERFAHREN UND KÜHLSYSTEM ZUM ÜBERTRAGEN VON WÄRME AUS EINEM MEDIUM AUF EINEN WÄRMETRÄGER IN EINEM VERFAHREN ZUR LEBENSMITTELHERSTELLUNG, VORZUGSWEISE BEI DER GETRÄNKEHERSTELLUNG, INSBESONDERE BEI DER BIERHERSTELLUNG; UND ENTSPRECHENDE VERWENDUNGEN**
METHOD AND COOLING SYSTEM FOR TRANSFERRING HEAT FROM A MEDIUM TO A HEAT TRANSFER MEDIUM IN A METHOD FOR PRODUCING FOOD, PREFERABLY IN THE PRODUCTION OF BEVERAGES, IN PARTICULAR IN THE PRODUCTION OF BEER; AND CORRESPONDING USES
PROCÉDÉ ET SYSTÈME DE REFROIDISSEMENT POUR LE TRANSFERT DE CHALEUR D'UN MILIEU À UN CALOPORTEUR DANS UN PROCÉDÉ DE PRODUCTION D'ALIMENTS, DE PRÉFÉRENCE DANS LA PRODUCTION DE BOISSONS, EN PARTICULIER DANS LA PRODUCTION DE BIÈRE ; ET UTILISATIONS CORRESPONDANTES

(30) Priorität: 17.10.2013 DE 102013017220
(43) Veröffentlichungstag der Anmeldung: 24.08.2016
(73) Patentinhaber: ZIEMANN HOLVRIEKA GmbH, 71636 Ludwigsburg (DE)
(72) Erfinder: WASMUHT, Klaus, 91792 Ellingen (DE); BECHER, Tobias, 71701 Schwieberdingen (DE); BLOMENHOFER, Verena, 74357 Bönningheim (DE)
(74) Vertreter: Kuhnen & Wacker
(86) Internationale Anmeldenummer: PCT/EP2014/068079
(87) Internationale Veröffentlichungsnummer: WO 2015/055341

(56) Entgegenhaltungen:
- EP-A1- 0 478 118
- CN-U- 201 729 821
- DE-A1- 19 852 185
- US-A- 3 969 908
- US-A1- 2012 193 440

## Beschreibung

Die vorliegende Erfindung betrifft ein Verfahren zum Übertragen von Wärme aus einem Medium auf einen Wärmeträger in einem Verfahren zur Lebensmittelherstellung, vorzugsweise bei der Getränkeherstellung, insbesondere bei der Bierherstellung, gemäß Anspruch 1, ein Kühlsystem zum Übertragen von Wärme aus einem Medium auf einen Wärmeträger in einem Verfahren zur Lebensmittelherstellung, vorzugsweise bei der Getränkeherstellung, insbesondere bei der Bierherstellung, gemäß Anspruch 7, und Verwendungen eines Wärmeträgers, eines Kühlsystems und einer Vorrichtung zum Ausbilden von Tröpfchen eines Wärmeträgers in einer Atmosphäre, zum Übertragen von Wärme von einem Medium auf einen Wärmeträger in einem Verfahren zur Lebensmittelherstellung, vorzugsweise bei der Getränkeherstellung, insbesondere bei der Bierherstellung, gemäß den Ansprüchen 12 bis 15.

Bei der Lebensmittelherstellung, bei der Getränkeherstellung und insbesondere bei der Bierherstellung, werden seit langem Wärmeträger bzw. Kälteträger zum Übertragen von Wärme aus zu kühlenden Medien verwendet. Vor der Einführung der Kältemaschine wurde bei der Bierherstellung Natureis während des Winters geerntet und in Eiskellern bis zur Verwendung als Wärmeträger in der Brauerei gelagert. Eine Kältewirkung konnte nur bis zum Erschöpfen der begrenzt zur Verfügung stehenden Eisvorräte erzielt werden. Die Kühlung des Mediums erfolgte indirekt, beispielsweise mittels in das Medium getauchten Schwimmern, in die das Eis eingelegt wurde.

Nachteilig bei der Verwendung des Natureises ist, dass das Eis nur zeitlich begrenzt und unter bestimmten Klimabedingungen zur Verfügung stand. Darüber hinaus steht Natureis nicht in beliebiger Menge zur Verfügung. Ferner ist der mit der Beschaffung und Handhabung des Natureises verbundene Arbeitsaufwand hoch, wodurch die Beschaffungskosten erheblich sind. Darüber hinaus steht in einigen Regionen, beispielsweise in tropischen oder subtropischen Gegenden, Natureis zur Nutzung in der industriellen Lebensmittelproduktion überhaupt nicht zur Verfügung.

Mit Einführung der Kältemaschine wurde die Kälteversorgung in der industriellen Lebensmittelproduktion, insbesondere in der Brauerei, unabhängig von der Verfügbarkeit von Natureis und war damit frei von saisonalen und geographischen Beschränkungen. Hierdurch konnten industrielle Produktionsstätten, insbesondere Brauereien, auch in Regionen aufgebaut werden, in denen kein Natureis verfügbar ist.

In modernen Kälteanlagen wird ein Kältemittel, wie beispielsweise Ammoniak, in einem Kühlkreislauf geführt, wobei pro Zyklus die nachfolgenden Verfahrensschritte durchgeführt werden: Verdichten des Kältemittels, Wärmeübertragung vom verdichteten, warmen Kältemittel an die Umgebung, dabei Verflüssigung des Kältemittels, Entspannen des verflüssigten Kältemittels durch ein Expansionsventil, hierdurch Abkühlung des Kältemittels; und Wärmeübertragung vom abzukühlenden Medium auf das abgekühlte Kältemittel nach Inkontaktbringen von Kältemittel und Medium.

Dabei kann das abgekühlte Kältemittel direkt eingesetzt werden, wie beispielsweise bei der Ammoniak-Direktverdampfung. Alternativ kann einem Kälteträger, wie beispielsweise eine wässerige Salzlösung oder Eiswasser, durch das Kältemittel Wärme entzogen werden. Der Kälteträger kann wiederum zum Übertragen von Wärme aus einem abzukühlenden Medium verwendet werden.

Bei den vorstehend beschriebenen Kälteanlagen wird elektrische Energie aufgewendet, welche in mechanische Energie des Verdichters umgewandelt wird. Hieraus wird mit Hilfe des Kältemittels in dem vorstehend beschriebenen Kühlkreislauf letztlich eine Kälteleistung erzeugt.

Ein Nachteil der vorstehend beschriebenen Kälteanlage ist die verhältnismäßig geringe Leistungszahl COP im Bereich von etwa 3 bis 4,2. Dies bedeutet, dass mit den herkömmlichen Kälteanlagen aus 1 kWh elektrischer Leistung eine Kälteleistung von 3,0 bis 4,2 kWh erzielbar ist.

Darüber hinaus wird in den herkömmlichen Kälteanlagen bevorzugt Ammoniak als Kältemittel eingesetzt, welches bei Körperkontakt zu gesundheitlicher Beeinträchtigung führen und unter bestimmten Bedingungen explosiv sein kann.

Alternativ kommen Kohlenwasserstoff-Verbindungen, wie beispielsweise Fluor-Kohlenwasserstoffe und Fluorchlor-Kohlenwasserstoffe, als Kältemittel zur Anwendung, welche kostenträchtig sind und bei Freisetzung in die Umgebung eine umweltschädigende Wirkung haben können. Dokument DE19852185 offenbart eine Trockenschneekanone für den Einsatz von flüssigem Kohlendioxid zum Kühlen von Lebensmitteln, insbesondere von Fleisch und Fleischwaren.

Dokument US20120193440 offenbart ein Verfahren zur Herstellung von dendritischem Schnee aus Strömen feuchter und kalter Luft.

### Aufgabe der Erfindung

Der Erfindung liegt daher die Aufgabe zu Grunde, ein Verfahren und ein Kühlsystem zum Übertragen von Wärme aus einem Medium auf einen Wärmeträger in einem Verfahren zur Lebensmittelherstellung, vorzugsweise bei der Getränkeherstellung, insbesondere bei der Bierherstellung, und entsprechende Verwendungen eines Wärmeträgers, des Kühlsystems und einer Vorrichtung des Kühlsystems bereitzustellen, womit eine verbesserte energetische Effizienz und insbesondere eine höhere Leistungszahl (Ausbeute an Kälte- bzw. Kühlleistung pro eingesetzter elektrischer Leistung) erzielt wird. Entsprechend soll eine beim Lebensmittelherstellungsverfahren erforderliche Kälte- bzw. Kühlleistung kostengünstiger erzeugt werden.

Es ist ein Aspekt der vorliegenden Erfindung, ein Verfahren und ein Kühlsystem zum Übertragen von Wärme aus einem Medium auf einen Wärmeträger sowie entsprechende Verwendungen eines Wärmeträgers, des Kühlsystems und einer Vorrichtung des Kühlsystems bereitzustellen, welche eine durchgehende Versorgung eines Lebensmittel erzeugenden Betriebs mit der erforderlichen Kälteleistung sicherstellen.

Es ist ein weiterer Aspekt der vorliegenden Erfindung, ein Verfahren und ein Kühlsystem zum Übertragen von Wärme aus einem Medium auf einen Wärmeträger sowie entsprechende Verwendungen eines Wärmeträgers, des Kühlsystems und einer Vorrichtung des Kühlsystems bereitzustellen, welche eine verfahrenstechnisch vereinfachte und apparativ weniger aufwendige Bereitstellung einer gewünschten Kälteleistung ermöglichen.

Es ist ein weiterer Aspekt der vorliegenden Erfindung, eine Kühlleistung zur Verfügung zu stellen, bei deren Bereitstellung auf den Einsatz von gesundheitlich oder sicherheitstechnisch bedenklichen und umweltgefährdenden Kältemitteln, wie beispielsweise Ammoniak und Kohlenwasserstoff-Verbindungen, insbesondere Fluor-Kohlenwasserstoffe und Fluorchlor-Kohlenwasserstoffe, verzichtet wird.

### Definitionen

Im Rahmen dieser Anmeldung wird unter dem Begriff "Wärmeträger" jeder in Verfahren zur Lebensmittelherstellung, vorzugsweise bei der Getränkeherstellung, insbesondere bei der Bierherstellung, verwendbare Stoff verstanden, welche geeignet ist, Wärme aufzunehmen und wieder abzugeben.

Vorzugsweise kann unter dem Begriff "Wärmeträger" jeder im technischen Gebiet der Anmeldung verwendbare Wärmeträger, Kälteträger oder jedes im technischen Gebiet der Anmeldung verwendbare Kältemittel verstanden werden. Dabei kann der erfindungsgemäße Wärmeträger ein im wesentlichen reiner Stoff, oder ein Stoffgemisch, wie beispielsweise eine Lösung, eine Suspension, eine Emulsion oder ein Aerosol sein. Vorzugsweise schließt der Begriff "Wärmeträger" im Sinne der vorliegenden Anmeldung Ammoniak und Kohlenwasserstoffe, vorzugsweise halogenierte Kohlenwasserstoffe, insbesondere Fluor-Kohlenwasserstoffe und Fluorchlor-Kohlenwasserstoffe, und gegebenenfalls ähnliche Substanzen aus.

Insbesondere kann unter dem Begriff "Wärmeträger" ein Wärmeträger auf Basis von Wasser, beispielsweise wasserhaltige Fluide, vorzugsweise Wasser, beispielsweise ein Rohwasser, ein Brauwasser, ein Brauchwasser, ein Grundwasser, ein Quellwasser, ein Brunnenwasser oder ein Oberflächenwasser oder ein metastabiles Wasser; eine wässerige Lösung, wie beispielsweise eine Salzlösung; oder eine wässerige Suspension, wie beispielsweise ein Binäreis, verstanden werden. In diesem Zusammenhang ist ein "fester Aggregatzustand" des Wärmeträgers oder eines Fluidbestandteils desselben ein gefrorener Zustand des Wärmeträgers oder des Fluidbestandteils desselben, insbesondere Eis, Schnee oder dergleichen.

Der erfindungsgemäße Wärmeträger weist einen Bestandteil auf, wobei dieser Bestandteil in Abhängigkeit von seinem Energieinhalt, seiner Zusammensetzung und/oder von den Umgebungsbedingungen im flüssigen oder festen Aggregatzustand vorliegen kann. Dieser Bestandteil wird in dieser Anmeldung mit dem Begriff "Fluidbestandteil" bezeichnet. Der Wärmeträger kann vollständig aus dem Fluidbestandteil bestehen. Der Wärmeträger kann aber auch nur teilweise aus dem Fluidbestandteil bestehen und weitere Bestandteile aufweisen. Der Fluidbestandteil des erfindungsgemäßen Wärmeträgers ist Wasser.

Demgemäß kann der Wärmeträger die nachfolgend aufgeführten Bestandteile einzeln oder in Kombination enthalten: Salze; Zucker; Öle; Kristallisationsinhibitoren oder Gefrierinhibitoren, wie beispielsweise ein- oder mehrwertige Alkohole, insbesondere Glykol; Eis- oder Schneekristalle; Biozide bzw. Mikrobiozide, welche mikrobielles Wachstum hemmen und/oder welche der Hygienisierung des Wärmeträgers dienen, beispielsweise Chlorverbindungen; Kristallisationskeime, wie beispielsweise Bakterien oder AgI.

Erfindungsgemäß wird unter dem Begriff "Medium" jedes Material innerhalb eines Verfahrens zur Lebensmittelherstellung, vorzugsweise der Getränkeherstellung, insbesondere der Bierherstellung, verstanden, welches geeignet ist, Wärme auf den erfindungsgemäßen Wärmeträger zu übertragen.

So kann der Begriff "Medium" im Rahmen dieser Anmeldung Rohstoffe, Zwischenerzeugnisse und Enderzeugnisse der Lebensmittelherstellung, vorzugsweise der Getränkeherstellung, insbesondere der Bierherstellung umfassen. Insbesondere kann unter dem Begriff "Medium" eine Maische, eine Würze, ein Brauwasser, ein Brauchwasser, ein Warm- oder Heißwasser, der Inhalt eines Gärtanks, eines Lagertanks oder eines sonstigen Gefäßes, eine Hefesuspension, ein Bier in allen Herstellungs- und Behandlungsstufen, insbesondere ein fertiges Bier, ein alkoholhaltiges oder alkoholfreies Getränk in allen Herstellungs- und Behandlungsstufen, insbesondere Softdrinks, Milch, Tee-Getränke, Wein und Saftgetränke, Gemüsesaft, Fruchtsaft, Limonade, Nektar, Honig, Sirup, Flüssigkeiten auf Teebasis, Grundstoff, Konzentrate und beliebige Mischungen dieser Flüssigkeiten, oder dergleichen vorgesehen.

Erfindungsgemäß wird unter dem Begriff "Ausbilden von Tröpfchen des Wärmeträgers" ein Verteilen oder Zerteilen des Wärmeträgers oder seines Fluidbestandteils in feine oder feinste Tropfen mit einer Tropfengröße von vorzugsweise 10 µm bis 2 mm, insbesondere 10 bis 500 µm, verstanden. Dabei schließt der Begriff "Ausbilden von Tröpfchen des Wärmeträgers" auch ein Versprühen, Verdüsen, Zerstäuben oder Verrieseln des Wärmeträgers oder sonstige zum Zerteilen des Wärmeträgers geeignete Maßnahmen, welche dem Fachmann bekannt sind, ein. Vorzugsweise findet erfindungsgemäß das "Ausbilden von Tröpfchen des Wärmeträgers" in einer Atmosphäre statt.

Unter dem Begriff "Atmosphäre" wird erfindungsgemäß ein im wesentlichen oder vollständig gasförmiges Substrat verstanden, welches Reingase, Gemische von Gasen und Aerosole einschließt. Vorzugsweise ist die Atmosphäre Luft oder ein Teil der Lufthülle der Erde. Oder die Atmosphäre kann der Lufthülle der Erde entnommen sein oder steht mit der Lufthülle der Erde in Fluidverbindung stehen. Dabei kann erfindungsgemäß die Atmosphäre einen Druck in einem Bereich von 0,3·10⁵ bis 1,2·10⁵ Pa (0,3 bis 1,2 bar), vorzugsweise 0,5·10⁵ bis 1,15·10⁵Pa, vorzugsweise 0,9·10⁵ bis 1,10·10⁵ Pa, insbesondere 0,95·10⁵ bis 1,05·10⁵ Pa, aufweisen.

Unter dem Begriff "Inkontaktbringen des Wärmeträgers mit dem Medium" wird eine derartige räumliche Annäherung des Wärmeträgers an das Medium verstanden, dass eine Übertragung von Wärme vom Medium auf den Wärmeträger ermöglicht wird. Insbesondere kann hierunter das unmittelbare Berühren von Medium und Wärmeträger verstanden werden. Darüber hinaus können der Wärmeträger und das Medium eine Trennschicht, wie beispielsweise eine Wärmeüberträger-, Rohrleitungs- oder Tankwand, jeweils von einer Seite der Trennschicht her berühren, so dass eine Wärmeübertragung vom Medium auf den Wärmeträger durch Wärmeleitung durch die Trennschicht ermöglicht wird, ohne dass sich der Wärmeträger und das Medium unmittelbar berühren.

Unter dem Begriff "unmittelbar vor dem Ausbilden der Tröpfchen" wird erfindungsgemäß ein beliebiger Zeitpunkt vor dem Ereignis der Tröpfchenbildung in einem Zeitraum von größer null bis kleiner 5 s, insbesondere von größer null bis kleiner 1 s, verstanden.

Unter dem Begriff "unmittelbar vor der zum Ausbilden der Tröpfchen geeigneten Vorrichtung" wird ein beliebiger räumlicher Abstand zur zum Ausbilden der Tröpfchen geeigneten Vorrichtung oder eines Teils derselben, vorzugsweise zu einer Austrittsöffnung für den Wärmeträger, insbesondere zu einer Düse, in einem Bereich von größer null bis kleiner 2 cm, insbesondere von größer null bis 1 cm, verstanden.

Unter dem Begriff "Feuchtkugeltemperatur", auch als "Feuchttemperatur" oder "Kühlgrenztemperatur" bezeichnet, wird erfindungsgemäß jene Temperatur verstanden, die eine Luftportion haben würde, wenn es adiabatisch bei konstantem Druck durch Verdunstung von Wasser in die Portion bis zur Sättigung gekühlt und dabei die benötigte latente Wärme der Portion entzogen werden würde. Insbesondere wird die Feuchtkugeltemperatur als die Temperatur definiert, welche gemäß dem in der nachfolgenden Veröffentlichung beschriebenen Messverfahren ermittelt wird: "DIN-VDI-Taschenbuch 332", Beuth Verlag GmbH Berlin Wien Zürich, 1999, ab Seite 120: "Beim Psychrometer wird die Temperatur eines trockenen und eines befeuchteten Thermometer bestimmt; befeuchtet wird derjenige Thermometerfühler, der von einer glatt anliegenden Gewebehülle (Baumwolle oder ähnlichem) umschlossen ist. Die mit diesen Thermometern gemessene Temperaturdifferenz ist außer von der Luftfeuchte auch von der Ventilationsgeschwindigkeit abhängig. Deshalb wird zumindest das befeuchtete Thermometers zwangsbelüftet. Die Strömungsgeschwindigkeit bei Zwangsbelüftung hängt von der Ausführungsform des Psychrometers ab und soll mindestens 2,5 m/s betragen."

Alternativ kann erfindungsgemäß unter der "Feuchtkugeltemperatur" die Feuchtkugeltemperatur definiert werden, welche gemäß der europäischen Norm DIN EN 16242:2013-03 bestimmt wird.

Erfindungsgemäß bedeutet der Begriff "Lagern" des Wärmeträgers ein Aufbewahren oder Speichern des Wärmeträgers, insbesondere in einem hierzu geeigneten Gefäß. Dabei kann der Wärmeträger zur Umgebung hin offen oder von der Umgebung isoliert aufbewahrt werden. Vorzugsweise ist ein Aufbewahren des Wärmeträgers auf einer ebenen Fläche oder in einem tankartigen Gefäß vorgesehen.

Erfindungsgemäß wird unter dem Begriff "Gas" jeder gasförmige Stoff, insbesondere Luft, verstanden. Dabei kann das Gas auch eine Zusammensetzung aufweisen, welche mit der erfindungsgemäßen, vorstehend definierten "Atmosphäre" identisch ist. Insbesondere kann das Gas auch der Atmosphäre entnommen oder ein Teil der Atmosphäre sein.

Erfindungsgemäß bedeutet der Begriff "Inbewegunghalten oder Bewegen" des Wärmeträgers vorzugsweise ein Rühren, Pumpen, Begasen, pulsartiges Beaufschlagen mit einem unter Druck stehenden Wärmeträger oder Gas oder einer unter Druck stehenden Flüssigkeit. Dieser Begriff schließt ferner jede Form der Behandlung des Wärmeträgers ein, welche geeignet ist, eine Agglomeration oder ein Verklumpen des Wärmeträgers während des Lagerns zu vermeiden oder wenigstens zu vermindern.

Erfindungsgemäß wird unter einer "Teilmenge" jeder von null und von der Gesamtmenge verschiedene Anteil an einer Gesamtmenge oder Gesamtheit verstanden. Dabei kann der Anteil auch als prozentualer Anteil an einer Gesamtmenge im Bereich von größer null bis kleiner 100 % definiert werden.

Erfindungsgemäß wird ferner unter dem Begriff "Vorrichtung zum Ausbilden von Tröpfchen" des Wärmeträgers eine Vorrichtung verstanden, welche geeignet ist, ein Verteilen oder Zerteilen des Wärmeträgers oder seines Fluidbestandteils in feine oder feinste Tropfen mit einer Tropfengröße von vorzugsweise 10 µm bis 2 mm, insbesondere 10 bis 500 µm, zu bewirken. Die Vorrichtung zum Ausbilden von Tröpfchen weist eine Auslassöffnung, vorzugsweise mit düsenartiger Struktur, auf, welche zum Zerteilen einer Flüssigkeit wie vorstehend beschrieben geeignet ist. Die Vorrichtung ist insbesondere eine Schneekanone oder Schneilanze, insbesondere mit sogenannten Nukleatordüsen, wie sie der Fachmann aus dem Gebiet der künstlichen Erzeugung von Schnee oder Eis kennt. Erfindungsgemäß können beispielsweise Schneekanonen bzw. Nukleartordüsen der Firma Bächler Top Track AG, Auw/Schweiz, Model "SnoTek", eingesetzt werden, wie sie beispielsweise in der Druckschrift EP 2 071 258 offenbart sind.

Erfindungsgemäß umfaßt der Begriff "Vorrichtung zum Übertragen von Wärme vom Medium auf den Wärmeträger" eine Maschine oder einen Apparat, die bzw. der zum Übertragen von Wärme vom Medium auf den Wärmeüberträger geeignet und im technischen Gebiet der Erfindung einsetzbar ist. Vorzugsweise umfaßt die Vorrichtung zum Übertragen von Wärme vom Medium auf den Wärmeträger: Plattenwärmeüberträger, Röhrenwärmeüberträger, Spiralwärmeüberträger, U-Rohr-Wärmeüberträger, Rohrbündelwärmeüberträger, Mantelrohrwärmeüberträger und/oder an Behälterwänden und/oder Behälteroberflächen angeordnete Kühltaschen oder dergleichen, insbesondere Würzekühler oder dergleichen.

Erfindungsgemäß wird unter dem Begriff "Vorrichtung zum Einstellen eines Drucks" des Wärmeträgers oder des Gases eine Vorrichtung verstanden, die geeignet ist, den Druck des Wärmeträgers oder des Gases auf ein vorgegebenes Niveau einzustellen, vorzugsweise eine Pumpe, ein Gebläse, ein Ventilator oder ein Verdichter.

Erfindungsgemäß bedeutet der Begriff "Trenneinrichtung" eine Einrichtung, welche geeignet ist, eine räumliche Trennung zwischen einer Teilmenge des Wärmeträgers im flüssigen Aggregatzustand und einer weiteren Teilmenge des Wärmeträgers im festen Aggregatzustand herbeizuführen. Dabei kann die Trenneinrichtung durchlässig für den Wärmeträger im flüssigen Aggregatzustand sein oder wenigstens einen Durchlaß für den Wärmeträger im flüssigen Aggregatzustand aufweisen.

Ferner wird unter dem Begriff "Einrichtung zum Abziehen des Wärmeträgers" eine Einrichtung verstanden, welche geeignet ist, den Wärmeträger aus der Vorrichtung zur Aufnahme oder zum Lagern des Wärmeträgers abzuziehen, vorzugsweise ein Schlauch, eine Leitung oder dergleichen.

Im Rahmen dieser Anmeldung wird als Leistungszahl COP (coefficient of performance) eines Verfahrens oder einer Vorrichtung eine spezifische, dimensionslose Kenngröße definiert, welche dem Verhältnis der erhaltenen Kälteleistung zu der eingesetzten elektrischen Energie entspricht.

In Bezug auf die erfindungsgemäß beschriebenen Verfahren, Vorrichtungen und Verwendungen sind die zur Verwirklichung dieser erfindungsgemäßen Gegenstände erforderlichen weiteren Einrichtungen, insbesondere Rohrleitungen, Pumpen, Ventile, Steuer- und Regelsysteme, Stromversorgung, Sensor- und Messeinrichtungen und dergleichen sowie Hilfs- und Betriebsstoffe dem Fachmann bekannt und werden in der vorliegenden Beschreibung aus Gründen der Übersichtlichkeit nicht näher beschrieben.

So weit in dieser Anmeldung nicht ausdrücklich definiert, wird den in dieser Anmeldung verwendeten Begriffen die für den Fachmann im technischen Gebiet der Anmeldung, nämlich der Lebensmittelherstellung, vorzugsweise der Getränkeherstellung, insbesondere der Bierbereitung, üblichen Definition zugeordnet.

### Zusammenfassung der Erfindung

Die vorstehend definierte Aufgabe wird in verfahrenstechnischer Hinsicht durch das Verfahren mit den Merkmalen des Anspruchs 1 gelöst.

Erfindungsgemäß wird ein Verfahren zum Übertragen von Wärme aus einem Medium auf einen Wärmeträger in einem Verfahren zur Lebensmittelherstellung, vorzugsweise bei der Getränkeherstellung, insbesondere bei der Bierherstellung, bereitgestellt, mit den Schritten: (a) Bereitstellen des Wärmeträgers; wobei der Wärmeträger einen im flüssigen Aggregatzustand vorliegenden Fluidbestandteil aufweist; (b) Ausbilden von Tröpfchen des Wärmeträgers, vorzugsweise durch Versprühen oder Verdüsen oder Zerstäuben oder Verrieseln des Wärmeträgers, in einer Atmosphäre mittels einer zum Ausbilden von Tröpfchen geeigneten Vorrichtung; wobei die Atmosphäre gasförmig ist; wobei die Atmosphäre vorzugsweise ein Teil der Lufthülle der Erde ist oder der Lufthülle der Erde entnommen ist oder mit der Lufthülle der Erde in Fluidverbindung steht; wobei der Wärmeträger Wärme an die Atmosphäre abgibt; wobei der Fluidbestandteil des Wärmeträgers oder ein Teil des Fluidbestandteils (FB) beim oder nach dem Ausbilden der Tröpfchen in den festen Aggregatzustand übergeht; und (c) Inkontaktbringen des Wärmeträgers (WT), insbesondere des hierbei erhaltenen Wärmeträgers (WT), mit dem Medium (M), wobei Wärme vom Medium (M) auf den Wärmeträger (WT) übertragen wird.

Ein Vorteil der vorliegenden Erfindung ist es, ein Verfahren, ein Kühlsystem und entsprechende Verwendungen eines Wärmeträgers, des Kühlsystems und einer Vorrichtung zum Übertragen von Wärme aus einem Medium auf einen Wärmeträger in einem Verfahren zur Lebensmittelherstellung, vorzugsweise bei der Getränkeherstellung, insbesondere bei der Bierherstellung, bereitzustellen, so dass eine verbesserte energetische Effizienz und insbesondere eine höhere Ausbeute an Kühlleistung pro eingesetzter elektrischer Leistung erzielt wird.

Erfindungsgemäß wird damit erstmals ein Verfahren zum Übertragen von Wärme aus einem Medium auf einen Wärmeträger in einem Verfahren zur Lebensmittelherstellung beschrieben, bei dem der Wärmeträger zur Abgabe von Wärme in feinste Tröpfchen zerteilt wird und der Fluidbestandteil des Wärmeträgers oder wenigstens ein Teil desselben vom flüssigen in den festen Aggregatzustand übergeht.

Durch die feine bis feinste Zerteilung des Wärmeträgers in Tröpfchen in Kombination mit dem Aggregatzustandswechsel des Fluidbestandteils des Wärmeträgers oder eines Teils des Fluidbestandteils wird erreicht, dass der Wärmeträger eine große Menge Energie in Gestalt von Verdunstungswärme an die Atmosphäre und damit an die Umgebung bei einem vergleichsweise geringen Einsatz von Primärenergie, insbesondere von elektrischer Energie, abgibt. Die Wärmeabgabe gründet dabei auf einer Kombination aus der Wärmeabgabe durch Temperaturerniedrigung des Wärmeträgers, bei der die Wärmekapazität des Wärmeträgers bestimmend ist, und der Wärmeabgabe durch Freisetzen der Enthalpie beim Aggregatzustandswechsel (Kristallisationsenthalpie oder Schmelzenthalpie). Für das erfindungsgemäße Verfahren lassen sich mit einem Einsatz von 1 kWh elektrische Energie eine Kälteleistung von über 200 kWh erzielen, was einer Leistungszahl COP von über 200 entspricht. Dagegen werden bei herkömmlichen Kälteanlagen mit 1 kWh elektrische Energie lediglich im Bereich von etwa 3,0 bis 4,2 kWh an Kälteenergie erzeugt, was einem COP von etwa 3,0 bis 4,2 entspricht.

Diese Wirkungen lassen sich durch das Ausbilden der Tröpfchen in einer Atmosphäre erzielen, welche einen Übergang des Fluidbestandteils des Wärmeträgers oder eines Teils des Fluidbestandteils in den festen Aggregatzustand erlaubt. Sobald also eine geeignete Tröpfchen-Gestalt des Wärmeträgers in der Atmosphäre vorliegt, muß keine weitere Energie aufgewendet werden, um eine Wärmeabgabe an die Atmosphäre zu erreichen.

Damit wird eine verbesserte energetische Effizienz, nämlich eine höhere Ausbeute an Kälteleistung pro eingesetzte elektrische Leistung, erzielt.

Mittels des erfindungsgemäßen Verfahrens lassen sich folglich in kurzer Zeit große Mengen an verfestigtem Wärmeträger energieeffizient erzeugen, welcher als Kältereservoir dient und zur Aufnahme von Wärme aus einem Medium in einem Verfahren zur Lebensmittelherstellung verwendet werden kann.

Darüber hinaus kann erfindungsgemäß die Atmosphäre ein Teil der Lufthülle der Erde sein oder der Lufthülle der Erde entnommen sein oder mit der Lufthülle der Erde in Fluidverbindung stehen. Damit wird die Atmosphäre als ubiquitär und kostenfrei zur Verfügung stehende Wärmesenke verwendet.

Beim erfindungsgemäßen Verfahren wird in Schritt (c) vorteilhaft der Wärmeträger in dem Zustand verwendet, wie er aus Schritt (b) nach dem vollständigen oder teilweisen Aggregatzustandwechsel des Fluidbestandteils erhalten worden ist. Hierdurch wird ein maximales Wärmeaufnahmevermögen des Wärmeträgers im nachfolgenden Schritt (c) sichergestellt.

Die Offenbarung der vorliegenden Erfindung und insbesondere das vorstehend beschriebene Verfahren sowie die nachfolgend beschriebenen Verwendungen schließen aber auch den Fall ein, dass der in Schritt (b) in den festen Aggregatzustand übergegangene Fluidbestandteil des Wärmeträgers oder eine Teilmenge desselben, beispielsweise durch Wärmeeintrag während des Lagerns des in Schritt (b) erhaltenen Wärmeträgers, teilweise oder vollständig wieder in den flüssigen Aggregatzustand übergeht, bevor der Wärmeträger mit dem Medium in Schritt (c) in Kontakt gebracht wird. Insbesondere schließt die Erfindung auch die Verwendung von Wärmeträgern in Schritt (c) ein, bei denen eine Teilmenge des Fluidbestandteils im flüssigen Aggregatzustand und eine andere Teilmenge des Fluidbestandteils im festen Aggregatzustand vorliegen, wie beispielsweise Eis-Wasser-Mischungen oder Binäreismischungen.

Ferner ist es erfindungsgemäß möglich, dass, wenn ein Teil des Fluidbestandteils des in Schritt (b) erhaltenen Wärmeträgers im flüssigen Aggregatzustand vorliegt, nur diejenige Teilmenge des Wärmeträgers in Schritt (c) mit dem Medium in Kontakt gebracht wird, bei welcher der Fluidbestandteil im flüssigen Aggregatzustand vorliegt.

Die Verwendung des Wärmeträgers, dessen Fluidbestandteil wenigstens teilweise, insbesondere überwiegend oder ausschließlich, in flüssigem Aggregatzustand vorliegt, hat den Vorteil der leichten Transportierbarkeit des Wärmeträgers, beispielsweise durch Pumpen in Rohrleitungen. Darüber hinaus bewirkt eine bessere Benetzung der bzw. ein verbesserter Kontakt des Wärmeträgers zur Vorrichtung zum Übertragen von Wärme vom Medium auf den Wärmeträger für eine verbesserte Wärmeübertragung zwischen Wärmeträger und Medium bzw. zwischen Wärmeträger und Vorrichtung.

Selbst wenn der Fluidbestandteil des Wärmeträgers bei dessen Einsatz gemäß Schritt (c) wieder im flüssigen Aggregatzustand vorliegt, wird aufgrund der im Endeffekt durch die Verdunstungskühlung bewirkten Temperaturerniedrigung des Wärmeträgers ein hoher energetischer Wirkungsgrad erzielt. Beispielsweise beträgt die Leistungszahl COP für Wasser als Wärmeträger bei einer Temperaturerniedrigung um 10 °C etwa 42. Dies entspricht in etwa der zehn- bis vierzehnfachen Leistungszahl einer herkömmlichen Kälteanlage (COP = ca. 3,0 bis 4,2).

Ferner kann durch den Einsatz eines wasserbasierten bzw. wasserhaltigen Wärmeträgers, insbesondere von Wasser, sichergestellt werden, dass keine gesundheitlichen Beeinträchtigungen, Explosionsgefahr oder Schäden für die Umwelt zu besorgen sind.

Nachdem erfindungsgemäß auf unter Druck stehende Kältemittel verzichtet werden kann, vereinfacht sich der konstruktive Aufwand des entsprechenden Kühlsystems, insbesondere hinsichtlich der Druckstabilität und den Dichtigkeitsanforderungen. Darüber hinaus sind wasserbasierte Wärmeträger kostengünstig und ubiquitär verfügbar.

Vorteilhafte Ausführungsformen des erfindungsgemäßen Verfahrens sind Gegenstände der abhängigen Verfahrensansprüche.

So kann der Wärmeträger unmittelbar vor dem Ausbilden der Tröpfchen oder unmittelbar vor der zum Ausbilden der Tröpfchen geeigneten Vorrichtung eine Temperatur im Bereich von - 10 bis 10 °C, vorzugsweise - 1 bis 8,5 °C, vorzugsweise - 1 bis 6,5 °C, vorzugsweise 0 bis 6,5 °C, insbesondere 0 bis 6 °C, aufweisen.

Das erfindungsgemäße Verfahren erlaubt den Einsatz des Wärmeträgers in einem breiten Temperaturbereich und insbesondere auch bei Temperaturen des Wärmeträgers oberhalb des Gefrierpunkts von Wasser. Hierdurch werden eine hohe Flexibilität und ein ausgedehnter Zeitraum für den Einsatz des erfindungsgemäßen Verfahrens sichergestellt. Zudem wird die Abhängigkeit von der jahreszeitlichen Situation verringert. Darüber hinaus ist erfindungsgemäß auch der Einsatz von flüssigem Wasser mit einer Temperatur von unter 0 °C (Wasser im metastabilen Zustand) möglich.

Ferner kann der Wärmeträger unmittelbar vor dem Ausbilden der Tröpfchen oder der zum Ausbilden der Tröpfchen geeigneten Vorrichtung einen Druck in einem Bereich von 4·10⁵ bis 60·10⁵ Pa (4 bis 60 bar), vorzugsweise 5·10⁵ bis 20·10⁵ Pa, vorzugsweise 6·10⁵ bis 10·10⁵ Pa, insbesondere 6,5·10⁵ bis 8,5·10⁵ Pa, aufweisen.

Darüber hinaus kann die Atmosphäre beim Ausbilden der Tröpfchen einen Druck in einem Bereich von 0,3·10⁵ bis 1,2·10⁵ Pa (0,3 bis 1,2 bar), vorzugsweise 0,5·10⁵ bis 1,15·10⁵ Pa, vorzugsweise 0,9·10⁵ bis 1,10·10⁵ Pa, insbesondere 0,95·10⁵ bis 1,05·10⁵ Pa, aufweisen.

Durch Einstellen eines vorbestimmten Drucks des Wärmeträgers und/oder der Atmosphäre beim Ausbilden der Tröpfchen wird eine für die Wärmeabgabe besonders vorteilhafte, kleine Tröpfchengröße erreicht.

Darüber hinaus kann die Atmosphäre eine Feuchtkugeltemperatur in einem Bereich von - 50 bis 0 °C, vorzugsweise von - 20 bis - 1 °C, insbesondere von - 8 bis - 1,5 °C, aufweisen.

Somit ist das erfindungsgemäße Verfahren in einem breiten Bereich hinsichtlich der Feuchtkugeltemperatur einsetzbar. Hierdurch werden die Einsatzmöglichkeiten vergrößert, und das Verfahren insbesondere auch bei relativ hohen Feuchtkugeltemperaturen im Bereich von - 2 bis 0 °C einsetzbar.

Der Fluidbestandteil des Wärmeträgers kann nach dem Inkontaktbringen mit dem Medium und der Wärmeaufnahme (nach Schritt (c)) teilweise oder vollständig im flüssigen Aggregatzustand vorliegen.

Durch die wenigstens teilweise Überführung des Fluidbestandteils des Wärmeträgers vom festen in den flüssigen Aggregatzustand beim oder nach dem Inkontaktbringen mit dem Medium wird sichergestellt, dass der Wärmeträger dem Medium eine hohe Wärmemenge entzieht. So kann erfindungsgemäß einerseits das auf der Wärmekapazität des Wärmeträgers bei Temperaturänderungen beruhende Wärmeaufnahmevermögen ausgenutzt werden. Andererseits kann auch die Schmelzenthalpie, die durch einen Aggregatzustandswechsel des Fluidbestandteils von fest zu flüssig zur Verfügung steht, zur Steigerung der Kühlwirkung ausgenutzt werden.

Das erfindungsgemäße Verfahren kann ferner den Schritt aufweisen:
(d) nach Schritt (b) und vor Schritt (c) Lagern der Gesamtmenge oder einer Teilmenge des Wärmeträgers, vorzugsweise in einem ersten Behälter.

Durch das Lagern wenigstens einer Teilmenge des Wärmeträgers ist es möglich, die Schritte (b) und (c) des erfindungsgemäßen Verfahrens zumindest weitgehend zeitlich voneinander zu entkoppeln. So kann der in Schritt (b) vorbereitete Wärmeträger mit verringertem Wärmeinhalt unabhängig vom aktuellen Bedarf in größeren Mengen erzeugt werden. Umgekehrt entfällt beim Vorhandensein einer ausreichenden Lagerkapazität die Notwendigkeit, zeitgleich mit einem großen Bedarf an Wärmeträger zum Abkühlen des Mediums den Wärmeträger durch Abführen von Wärme gemäß Schritt (b) vorzubereiten.

Besonders vorteilhaft ist hierbei, dass die Erzeugung und Bereitstellung eines Wärmeträgers mit verringertem Wärmeinhalt gemäß Schritt (b) in Zeiträumen erfolgen kann, in denen die Umgebungsbedingungen und damit die Umgebungs- bzw. Atmosphärenbedingungen hierfür besonders günstig sind, insbesondere während der Wintermonate. Umgekehrt erlaubt eine Lagerung des gemäß Schritt (b) vorbereiteten Wärmeträgers eine durchgehende Versorgung mit dem vorbereiteten Wärmeträger auch in Zeiträumen, in denen die Umgebungsbedingungen eine Durchführung des Schritts (b) nicht erlauben oder energetisch weniger günstig sind, insbesondere während der Sommermonate und der Übergangszeiten.

Das Verfahren kann ferner den Schritt aufweisen:
(e) nach Schritt (c) Lagern der Gesamtmenge oder einer Teilmenge des Wärmeträgers vorzugsweise im ersten Behälter oder in einem zweiten Behälter.

Durch das Vorsehen des Lagerns des nach Schritt (c) erhaltenen Wärmeträgers mit erhöhtem Wärmeinhalt wird die zeitliche Entkopplung von Erzeugung des Wärmeträgers mit verringertem Wärmeinhalt gemäß Schritt (b) und Verbrauch des so vorbereiteten Wärmeträgers in Schritt (c) weiter erleichtert. So kann aufgrund der Bevorratung des Wärmeträgers mit erhöhtem Wärmeinhalt insbesondere die Erzeugung des Wärmeträgers mit verringertem Wärmeinhalt gemäß Schritt (b) auch dann stattfinden, wenn zeitgleich kein Wärmeträger mit erhöhtem Wärmeinhalt gemäß Schritt (c) erzeugt wird.

Darüber hinaus kann durch das Vorsehen eines zweiten, separaten Behälters zum Lagern des Wärmeträgers mit erhöhtem Wärmeinhalt ("Rücklauf) eine Wärmeübertragung durch direkten Kontakt des Wärmeträgers mit verringertem Wärmeinhalt ("Vorlauf") und des Wärmeträgers mit erhöhtem Wärmeinhalt ("Rücklauf") und damit eine Wärmeübertragung zwischen einer wärmeren Teilmenge und einer kälteren Teilmenge des Wärmeträgers vermieden werden.

Darüber hinaus kann das Ausbilden von Tröpfchen des Wärmeträgers unter Verwendung eines Gases durchgeführt werden. Dabei weist das Gas vorzugsweise einen Druck in einem Bereich von 4·10⁵ bis 12·10⁵ Pa (4 bis 12 bar), vorzugsweise 6·10⁵ bis 10·10⁵ Pa, vorzugsweise 7·10⁵ bis 9·10⁵ Pa, insbesondere 7,5·10⁵ bis 8,5·10⁵ Pa, auf. Ferner kann das Gas der Atmosphäre entnommen sein.

Das Verwenden von Gas eines bestimmten Drucks bei der Ausbildung von Tröpfchen des Wärmeträgers bewirkt die Erzielung von noch kleineren Tröpfchengrößen, wodurch der Wärmeübergang von Wärmeträger auf die Atmosphäre durch Verdunstung verbessert wird. Wenn das Gas zudem der Atmosphäre entnommen ist, steht eine kostengünstige und ubiquitär verfügbare Quelle für dieses Gas zur Verfügung. Zudem ist die Reinheit eines aus der Atmosphäre stammenden Gases im erfindungsgemäßen Verfahren in der Regel hinreichend und eine weitere Aufbereitung des Gases ist zumeist nicht erforderlich.

Es ist insbesondere Teil der vorliegenden Erfindung, die vorstehend genannten Temperatur- bzw. Feuchtkugeltemperatur- und Druckbedingungen für den Wärmeträger, die Atmosphäre und/oder das Gas miteinander in beliebiger Weise zu kombinieren.

Das erfindungsgemäße Verfahren kann ferner den Schritt aufweisen:
(f) während des Schrittes (d) Inbewegunghalten oder Bewegen der Gesamtmenge oder einer Teilmenge des gelagerten Wärmeträgers.

Durch das Inbewegunghalten oder Bewegen wenigstens eines Teils des Wärmeträgers während des Lagerns wird eine Agglomeration der festen Wärmeträgerbestandteile vermieden und die Transportfähigkeit, insbesondere die Pumpfähigkeit, des Wärmeträgers sichergestellt.

Das erfindungsgemäße Verfahren kann ferner den Schritt aufweisen:
(g) vor Schritt (b) Kühlen des Wärmeträgers, vorzugsweise durch Ausbilden von Tröpfchen des Wärmeträgers, insbesondere durch Versprühen oder Verdüsen oder Zerstäuben oder Verrieseln des Wärmeträgers, in der Atmosphäre, insbesondere mittels der zum Ausbilden der Tröpfchen geeigneten Vorrichtung; wobei der Wärmeträger Wärme an die Atmosphäre abgibt.

Durch ein vor Durchführung des Schrittes (b) vorgeschaltetes Kühlen des Wärmeträgers wird ein noch vorteilhafterer Arbeitsbereichs des erfindungsgemäßen Verfahrens leichter erreicht. Je kühler der in Schritt (b) verwendete Wärmeträger ist, desto einfacher läßt sich insbesondere ein Aggregatzustandswechsel erzielen. Durch diese Vorkühlung ist es zudem möglich, Wärmeträger von noch höherer Ausgangstemperatur einzusetzen.

Des Weiteren kann der Wärmeträger ein Grundwasser, Quellwasser, Brunnenwasser oder Oberflächenwasser sein.

Durch die Verwendung der genannten Wässer als Wärmeträger stehen kostengünstig zu beschaffende und ubiquitär verfügbare Quellen für Wärmeträger von ausreichender bis hoher Qualität und Reinheit zur Verfügung.

Der aus Schritt (c) erhaltene Wärmeträger kann verworfen werden, ohne erneut als Ausgangsmaterial für den Schritt (b) zu dienen. Insbesondere kann er im Untergrund versickern gelassen oder in ein Oberflächenwasser eingeleitet werden.

Das Verwerfen von einem in Schritt (c) mit Wärme beladenen Wärmeträgers, also eine Einmalverwendung des Wärmeträgers, hat den Vorteil, dass die in Schritt (c) eingetragene Wärme nicht wieder an die Atmosphäre abgeführt werden muß, sondern zusammen mit dem verbrauchten Wärmeträger entsorgt wird.

In einer verbesserten Ausführungsform des Verfahrens können die Schritte (b) und (c) ein- oder mehrmals wiederholt werden. Dabei kann beim jeweiligen Schritt (b) der Wärmeträger verwendet werden, welcher aus dem jeweils unmittelbar vorangehenden Schritt (c) erhalten wurde.

Durch das ein- oder mehrmalige Wiederholen der Schritte (b) und (c) des erfindungsgemäßen Verfahrens wird der Wärmeträger im Wechselspiel von Beladen und Entladen mit Wärme im Kreis geführt. Hierdurch wird der Verbrauch an Wärmeträger insgesamt minimiert.

Die vorstehend genannte Aufgabe wird ferner in vorrichtungstechnischer Hinsicht durch das Kühlsystem mit den Merkmalen des Anspruchs 14 gelöst. Dabei gelten die Vorteile des erfindungsgemäßen Verfahrens für das erfindungsgemäße Kühlsystem analog.

So wird erfindungsgemäß erstmals ein Kühlsystem zum Übertragen von Wärme aus einem Medium auf einen Wärmeträger in einem Verfahren zur Lebensmittelherstellung, vorzugsweise bei der Getränkeherstellung, insbesondere bei der Bierherstellung, vorzugsweise zum Durchführen des erfindungsgemäßen Verfahrens, bereitgestellt. Dabei weist der Wärmeträger einen Fluidbestandteil auf. Das Kühlsystem weist eine Atmosphäre auf, welche gasförmig ist. Ferner weist das Kühlsystem eine Vorrichtung zum Ausbilden von Tröpfchen des Wärmeträgers auf, vorzugsweise durch Versprühen oder Verdüsen oder Zerstäuben oder Verrieseln des Wärmeträgers. Dabei ist die Vorrichtung zum Ausbilden von Tröpfchen des Wärmeträgers derart im Kühlsystem angeordnet, dass die Tröpfchen in der Atmosphäre ausbildbar sind oder die Tröpfchen nach derer Ausbildung in die Atmosphäre überführbar bzw. abgebbar sind. Das Kühlsystem weist ferner eine Vorrichtung zum Übertragen von Wärme vom Medium auf den Wärmeträger auf. Dabei ist die Atmosphäre wenigstens während des Ausbildens der Tröpfchen des Wärmeträgers ein Teil der Lufthülle der Erde oder ist der Lufthülle der Erde entnommen oder steht mit der Lufthülle der Erde in Fluidverbindung. Ferner ist das Kühlsystem geeignet, den Fluidbestandteil des Wärmeträgers oder einen Teil des Fluidbestandteils in den festen Aggregatzustand zu überführen.

Mit dem erfindungsgemäßen Kühlsystem ist es erstmals möglich, die gewünschten Kühlleistungen in einem Verfahren zur Lebensmittelherstellung mittels des erfindungsgemäßen Kühlsystems bereitzustellen, welche mit einfachen vorrichtungstechnischen Mitteln, insbesondere unter Zuhilfenahme einer Vorrichtung zum Ausbilden von Tröpfchen, auskommt.

Vorteilhafte Weiterbildungen des erfindungsgemäßen Kühlsystems sind Gegenstand der abhängigen Systemansprüche.

So kann das Kühlsystem ferner eine Vorrichtung zum Einstellen eines Drucks des Wärmeträgers, vorzugsweise eines Drucks des Wärmeträgers in der Vorrichtung zum Ausbilden der Tröpfchen des Wärmeträgers, aufweisen.

Dabei kann die Vorrichtung zum Einstellen des Drucks des Wärmeträgers eine eigenständige Vorrichtung oder Teil der Vorrichtung zum Ausbilden von Tröpfchen des Wärmeträgers sein.

Zudem kann das Kühlsystem ferner eine Vorrichtung zum Einstellen eines Drucks eines Gases, vorzugsweise ein Gebläse oder ein Verdichter, vorzugsweise auf einen Druck in einem Bereich von 4·10⁵ bis 12·10⁵ Pa, vorzugsweise 6·10⁵ bis 10·10⁵ Pa, vorzugsweise 7·10⁵ bis 9·10⁵ Pa, insbesondere 7,5·10⁵ bis 8,5·10⁵ Pa, aufweisen. Dabei kann das Gas vorteilhaft der Atmosphäre entnommen sein und der Vorrichtung zum Ausbilden der Tröpfchen des Wärmeträgers zuführbar sein.

Des weiteren kann das Kühlsystem wenigstens eine Vorrichtung zur Aufnahme oder zum Lagern der Gesamtmenge oder einer Teilmenge des Wärmeträgers (Aufnahmevorrichtung) aufweisen, vorzugsweise einen ersten Behälter zur Aufnahme des Wärmeträgers nach der Wärmeabgabe und/oder einen zweiten Behälter zur Aufnahme des Wärmeträgers nach der Wärmeaufnahme.

Besonders vorteilhaft ist es, wenn die Vorrichtung zur Aufnahme oder zum Lagern des Wärmeträgers Umfangsflächen aufweist, die zur Umgebung hin wärmegedämmt sind. Hierdurch läßt sich der Wärmeeintrag von außen in den Wärmeträger während des Lagerns minimieren und ein Übergang des Wärmeträgers vom festen in den flüssigen Aggregatzustand (Schmelzen des Wärmeträgers bzw. dessen Fluidbestandteils) verzögern.

Das Kühlsystem kann ferner eine Trenneinrichtung aufweisen. Dabei ist die Trenneinrichtung im Bereich oder in der Vorrichtung zur Aufnahme oder zum Lagern der Gesamtmenge oder einer Teilmenge des Wärmeträgers angeordnet. Bei gleichzeitigem Vorhandensein einer in der Aufnahmevorrichtung vorhandenen Teilmenge des Wärmeträgers im flüssigen Aggregatzustand und einer weiteren, in der Aufnahmevorrichtung vorhandenen Teilmenge des Wärmeträgers im festen Aggregatzustand kann die Trenneinrichtung derart im Bereich oder in der Aufnahmevorrichtung angeordnet sein, dass die Trenneinrichtung an einer Grenzfläche zwischen der Teilmenge des Wärmeträgers im flüssigen Aggregatzustand und der Teilmenge des Wärmeträgers im festen Aggregatzustand angeordnet ist.

Alternativ kann eine Grenzfläche zwischen der Teilmenge des Wärmeträgers im flüssigen Aggregatzustand und der Teilmenge des Wärmeträgers im festen Aggregatzustand ausgebildet sein. Dabei ist die Trenneinrichtung vorzugsweise im Wesentlichen waagerecht in der Aufnahmevorrichtung angeordnet. Zudem kann die Trenneinrichtung innerhalb der Aufnahmevorrichtung beweglich angeordnet sein, insbesondere entlang einer zur Grenzfläche zwischen der Teilmenge des Wärmeträgers im flüssigen Aggregatzustand und der Teilmenge des Wärmeträgers im festen Aggregatzustand im Wesentlichen senkrechten Achse. Schließlich kann die Trenneinrichtung durchlässig für den Wärmeträger im flüssigen Aggregatzustand sein oder wenigstens einen Durchlaß für den Wärmeträger im flüssigen Aggregatzustand aufweisen.

Die Trenneinrichtung erlaubt es, jeweils eine Teilmenge des Wärmeträgers im flüssigen Aggregatzustand und im festen Aggregatzustand in ein und derselben Vorrichtung zur Aufnahme oder zum Lagern des Wärmeträgers bzw. Aufnahmevorrichtung getrennt zu lagern. Hierdurch wird das Erfordernis einer zweiten Aufnahmevorrichtung vermieden. Darüber hinaus bietet die Trenneinrichtung die Möglichkeit, die Teilmenge des Wärmeträgers im flüssigen und festen Aggregatzustand getrennt zu halten und so einen Eintrag der Teilmenge des Wärmeträgers im festen Aggregatzustand beispielsweise in Pumpen zu vermeiden, falls unerwünscht.

In einer vorteilhaften Ausführungsform ist die Trenneinrichtung zur Wärmeleitung geeignet. Hierdurch ist es möglich, dass die Teilmenge des Wärmeträgers im festen Aggregatzustand Wärme von der Teilmenge des Wärmeträgers im flüssigen Aggregatzustand aufnimmt, und so die Teilmenge im flüssigen Aggregatzustand möglichst weit abkühlt. Hierdurch kann die energetische Effizienz beim Einsatz der Teilmenge des Wärmeträgers in flüssigem Aggregatzustand weiter verbessert werden.

Es ist insbesondere vorteilhaft, wenn die Trenneinrichtung beweglich innerhalb der Aufnahmevorrichtung angeordnet ist. Hierdurch stehen zwei räumlich bzw. volumenmäßig flexible Einheiten für die Aufnahme des Wärmeträgers im jeweiligen Aggregatzustand zur Verfügung, die an den momentanen Bedarf der jeweiligen Lagerkapazität angepaßt werden können.

Wenn die Trenneinrichtung zudem durchlässig für den Wärmeträger im flüssigen Aggregatzustand ist oder wenigstens einen entsprechenden Durchlaß aufweist, kann im Bereich des Wärmeträgers im festen Aggregatzustand anfallende Schmelzflüssigkeit des Wärmeträgers auf einfache Weise auf die Seite der Teilmenge des Wärmeträgers im flüssigen Aggregatzustand transportiert werden. Damit kann das Getrennthalten von Wärmeträger im flüssigen Aggregatzustand und im festen Aggregatzustand verbessert werden.

Insbesondere kann das erfindungsgemäße Kühlsystem zum gleichen Zweck einen ringförmigen Durchlaß zwischen Behälterwand und Trenneinrichtung aufweisen.

Darüber hinaus kann die Trenneinrichtung Elemente, vorzugsweise flache Kunststoffplatten, mit vorzugsweise mehreckiger (z.B. drei- bis zwölfeckiger), insbesondere wabenförmiger, Gestalt aufweisen. Dabei können die Elemente miteinander in Verbindung stehen und durch Verbindungselemente miteinander verbunden sein.

Dieser Aufbau der Trenneinrichtung aus den vorstehend beschriebenen Elementen erhöht die Flexibilität der Trenneinrichtung im Vergleich zu einer starren Platte und erlaubt zudem einen Durchtritt bzw. Durchfluß von Abschmelzwasser durch wenigstens eine in oder zwischen den einzelnen Elementen angeordnete, vorzugsweise schlitzförmige, Öffnung. Bei einer mehreckigen, insbesondere sechseckigen, Gestalt der Elemente wird ein Verkannten derselben vorteilhaft vermieden.

Darüber hinaus kann die Trenneinrichtung beheizbar sein, um vorteilhaft ein gezieltes Abschmelzen bei längeren Kälteperioden zu ermöglichen.

Das Kühlsystem kann ferner eine Einrichtung zum Abziehen des Wärmeträgers aus der Vorrichtung zur Aufnahme oder zum Lagern der Gesamtmenge oder einer Teilmenge des Wärmeträgers, vorzugsweise dem ersten Behälter, aufweisen. Dabei ist wenigstens eine Einlaßöffnung der Einrichtung zum Abziehen des Wärmeträgers im Bereich der Trenneinrichtung, vorzugweise an der Trenneinrichtung, insbesondere an der Trenneinrichtung auf der Seite der Teilmenge des Wärmeträgers im flüssigen Aggregatzustand, angeordnet.

Durch das vorstehend beschriebene Anordnen der Einrichtung zum Abziehen des Wärmeträgers kann sichergestellt werden, dass nur Wärmeträger in flüssigem Aggregatzustand aus der Aufnahme- oder Lagervorrichtung entnommen wird. Im Falle der Verwendung eines wasserhaltigen Wärmeträgers oder von Wasser als Wärmeträger kann darüber hinaus durch das Abziehen des Wärmeträgers an der Grenzfläche unter Ausnutzung der Anomalie des Wassers sichergestellt werden, dass der Aufnahmevorrichtung flüssiges Wasser der geringsten verfügbaren Temperatur als der Wärmeträger entnommen wird. Hierdurch wird der energetische Wirkungsgrad der Wärmeübertragung des erfindungsgemäßen Kühlsystems erhöht und der Einsatzbereich für den Wärmeträger vergrößert. Darüber hinaus kann bei gleicher Kälteleistung der Volumenstrom des Wärmeträgers verringert werden.

Zudem wird die vorstehend genannte Aufgabe in verwendungstechnischer Hinsicht durch die Verwendung eines erfindungsgemäß erhaltenen Wärmeträgers mit den Merkmalen des Anspruchs 20, die Verwendung einer Vorrichtung mit den Merkmalen des Anspruchs 21, die Verwendung des Kühlsystems mit den Merkmalen des Anspruchs 22 und die Verwendung eines Wärmeträgers mit den Merkmalen des Anspruchs 23 gelöst. Für erfindungsgemäße Verwendungen gelten die Vorteile des erfindungsgemäßen Verfahrens bzw. Kühlsystems analog.

So kann ein nach Schritt (b) des erfindungsgemäßen Verfahrens erhaltener Wärmeträgers zum Übertragen von Wärme aus einem Medium auf den Wärmeträger in einem Verfahren zur Lebensmittelherstellung, vorzugsweise bei der Getränkeherstellung, insbesondere bei der Bierherstellung, verwendet werden.

Ferner kann eine Vorrichtung zum Ausbilden von Tröpfchen eines Wärmeträgers in einer Atmosphäre, vorzugsweise zum Versprühen oder Verdüsen oder Zerstäuben oder Verrieseln des Wärmeträgers in der Atmosphäre, und zum Überführen eines Fluidbestanteils des Wärmeträgers oder eines Teils des Fluidbestandteils des Wärmeträgers in den festen Aggregatzustand, in einem Kühlsystem zur Übertragung von Wärme von einem Medium auf den Wärmeträger in einem Verfahren zur Lebensmittelherstellung, vorzugsweise bei der Getränkeherstellung, insbesondere bei der Bierherstellung, verwendet werden.

Des Weiteren kann das erfindungsgemäße Kühlsystem zum Übertragen von Wärme von einem Medium auf einen Wärmeträger in einem Verfahren zur Lebensmittelherstellung, vorzugsweise bei der Getränkeherstellung, insbesondere bei der Bierherstellung, und/oder zur Durchführung des Verfahrens verwendet werden.

Schließlich kann ein Wärmeträger zum Übertragen von Wärme aus einem Medium auf den Wärmeträger in einem Verfahren zur Lebensmittelherstellung, vorzugsweise bei der Getränkeherstellung, insbesondere bei der Bierherstellung, verwendet werden, wobei der Wärmeträger einen Fluidbestandteil aufweist. Dabei hat der Wärmeträger vor der Aufnahme der Wärme aus dem Medium Wärme an eine Atmosphäre bei oder nach Ausbilden von Tröpfchen des Wärmeträgers, vorzugsweise durch Versprühen oder Verdüsen oder Zerstäuben oder Verrieseln des Wärmeträgers in der Atmosphäre, abgegeben. Die Atmosphäre ist hierbei gasförmig und ist vorzugsweise ein Teil der Lufthülle der Erde oder ist der Lufthülle der Erde entnommen oder steht mit der Lufthülle der Erde in Fluidverbindung. Bei der Wärmeabgabe an die Atmosphäre kann der Fluidbestandteil des Wärmeträgers oder ein Teil des Fluidbestandteils ferner beim oder nach dem Ausbilden der Tröpfchen in den festen Aggregatzustand übergegangen sein.

### Alternative Ausführungsformen

Beim erfindungsgemäßen Verfahren werden die Schritte (a), (b) und (c) vorzugsweise in der angegebenen Reihenfolge durchgeführt. Durch die Wärmeabgabe in Schritt (b) vor der Wärmeaufnahme in Schritt (c) wird ein maximales Wärmeaufnahmevermögen des Wärmeträgers ermöglicht.

Die Erfindung ist jedoch hierauf nicht beschränkt. So kann beispielsweise die Reihenfolge der Schritte (b) und (c) vertauscht werden, so dass das Verfahren im der Reihenfolge der Schritte (a), (c) und (b) durchgeführt wird.

Die Erfindung wird nachfolgend in Ausführungsbeispielen anhand der Figuren der Zeichnung näher erläutert. Es zeigt:
- Fig. 1: eine schematische Ansicht einer ersten beispielhaften Ausführungsform des erfindungsgemäßen Kühlsystems;
- Fig. 2: eine schematische Ansicht einer zweiten beispielhaften Ausführungsform des erfindungsgemäßen Kühlsystems; und
- Fig. 3: eine schematische Draufsicht einer beispielhaften Ausführungsform der erfindungsgemäßen Trenneinrichtung (Ausschnitt).

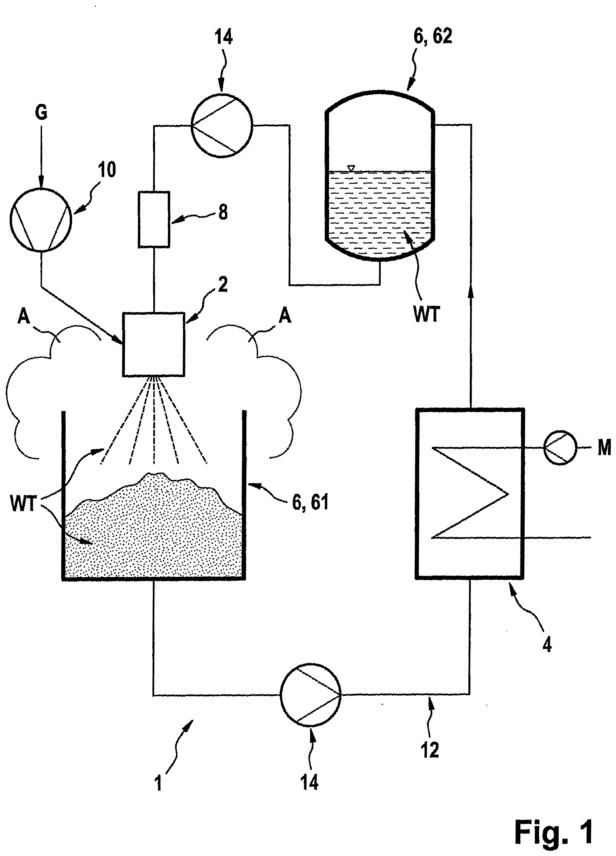

Gemäß der Darstellung der Fig. 1 weist eine erste Ausführungsform des erfindungsgemäßes Kühlsystems 1 eine Atmosphäre A, eine Vorrichtung 2 zum Ausbilden von Tröpfchen des Wärmeträgers WT, welcher einen Fluidbestandteil FB enthält (nicht dargestellt), eine Vorrichtung 4 zum Übertragen von Wärme von einem Medium M auf den Wärmeträger WT, und eine Vorrichtung 6 zur Aufnahme oder zum Lagern des Wärmeträgers WT auf. Dabei besteht die Vorrichtung 6 aus einer Vorrichtung 61 zur Aufnahme oder zum Lagern des Wärmeträgers WT nach der Wärmeübertragung vom Wärmeträger WT auf die Atmosphäre A und/oder einer Vorrichtung 62 zur Aufnahme oder zum Lagern des Wärmeträgers WT nach der Wärmeübertragung vom Medium M auf den Wärmeträger.

Darüber hinaus kann das System 1 auch eine Vorrichtung 8 zum Einstellen eines Drucks pWT des Wärmeträgers WT sowie eine Vorrichtung 10 zum Einstellen eines Drucks pG eines Gases G auf. Die Beförderung des Wärmeträgers zwischen den vorstehend genannten Vorrichtungen erfolgt in Rohrleitungen 12 mittels der Pumpen 14.

Erfindungsgemäß wird beispielsweise Wasser im flüssigen Aggregatzustand als der Wärmeträger der Vorrichtung 2 zum Ausbilden von Tröpfchen des Wärmeträgers zugeführt. Letztere kann beispielsweise als eine Schneekanone oder Schneilanze ausgeführt sein. Mittels der beispielsweise als Pumpe ausgeführten Vorrichtung 8 zum Einstellen eines Drucks pWT des Wärmeträgers WT wird der Druck des Wärmeträgers Wasser auf einen zum Ausbilden von kleinen Tröpfchen geeigneten Druck gebracht. Zum Erzeugen der Wärmeträger-Tröpfchen kann ferner ein unter Druck stehendes Gas G verwendet werden, dessen Druck mittels der Vorrichtung 10 einstellbar ist. Dabei kann die Vorrichtung 10 in dieser Ausführungsform als ein Gebläse oder Verdichter ausgeführt sein.

Der unter Druck stehende Wärmeträger WT wird in der Vorrichtung 2 einer düsenförmigen Austrittsöffnung zugeführt und beim Durchtritt durch oder Austritt aus der Austrittsöffnung in feine und feinste Tröpfchen zerteilt, also versprüht, verdüst, zerstäubt oder verrieselt. Dabei ist die Vorrichtung 2 derart angeordnet, dass der Wärmeträger beim Austritt aus der Vorrichtung 2 in die Atmosphäre A gelangt. Die ausgebildeten Wärmeträger-Tröpfchen weisen dank ihrer großen Oberfläche eine große Kontaktfläche zur Atmosphäre A auf, wodurch die Wärmeabgabe durch Verdunsten eines Teils des Wärmeträgers erleichtert wird. Die Verdunstung eines Teils des Wärmeträgers bewirkt, dass dem verbleibenden Teil des Wärmeträgers WT in flüssigem Aggregatzustand so viel Wärme entzogen wird, dass diese nicht nur abkühlt, sondern auch vom flüssigen in den festen Aggregatzustand übergeht, also in Gestalt von Eiskristallen oder Schnee ausfriert.

Der eis- oder schneeförmige Wärmeträger wird dann in den Behälter 61 eingebracht und dort bis zur weiteren Verwendung gelagert. Im Bedarfsfall wird der Wärmeträger dann in festem oder flüssigem Aggregatzustand oder in einem Gemisch, das beide Aggregatzustände aufweist, beispielsweise als Binäreis, mittels einer Pumpe 14 der Vorrichtung 4 zum Übertragen von Wärme vom Medium M auf den Wärmeträger WT zugeführt. Die Vorrichtung 4 ist aus dem Stand der Technik bekannt und kann beispielsweise ein Würzekühler in Gestalt eines Plattenwärmeüberträgers sein, dem als Medium M heiße Würze zum Kühlen zugeführt wird.

Der zugeführte Wärmeträger WT nimmt Wärme aus dem heißen Medium M auf, wobei dieses abkühlt. Bei dieser Wärmeaufnahme kann eine Teilmenge oder die Gesamtmenge des Wärmeträgers in den flüssigen Aggregatzustand übergehen und zudem einen Temperaturanstieg erfahren.

Im Anschluß wird der so erhaltene Wärmeträger WT in einem zweiten Behälter 62 zum Lagern des Wärmeträgers WT aufgenommen. Von dort wird der Wärmeträger WT bei Bedarf mittels einer Pumpe 14 wiederum der Vorrichtung 2 zum Ausbilden von Tröpfchen, also der Schneekanone oder Schneilanze, zugeführt, um erneut versprüht oder verdüst zu werden.

Bei dem vorstehend beschriebenen Verfahren bzw. Kühlsystem 1 kann der Wärmeträger WT ein- oder mehrfach im Kreis gefahren werden, das heißt, wiederholt zur Wärmeaufnahme und -abgabe verwendet werden.

Durch das erfindungsgemäße Verfahren kann innerhalb einer verhältnismäßig kurzen Zeit, beispielsweise während der Wintermonate, eine große Menge an Wärmeträger WT mit geringem Wärmeinhalt, also Eis oder Schnee, erzeugt werden. Diese Menge ist ausreichend, um den Bedarf eines industriellen Lebensmittelerzeugers, insbesondere eines Getränkeherstellers oder einer Brauerei, bei weitem zu decken, wie das nachfolgende Rechenbeispiel zeigt.

Dabei ist der energetische und apparative Aufwand vergleichsweise gering, da die Umgebung der Vorrichtung 2, also die Atmosphäre A, als kostenfreie und unerschöpfliche Wärmesenke zur Verfügung steht. Darüber hinaus wird das Wärmeaufnahmevermögen des Wärmeträgers Wasser durch das Abkühlen in Kombination mit einem Aggregatzustandswechsel von flüssig zu fest erheblich gesteigert.

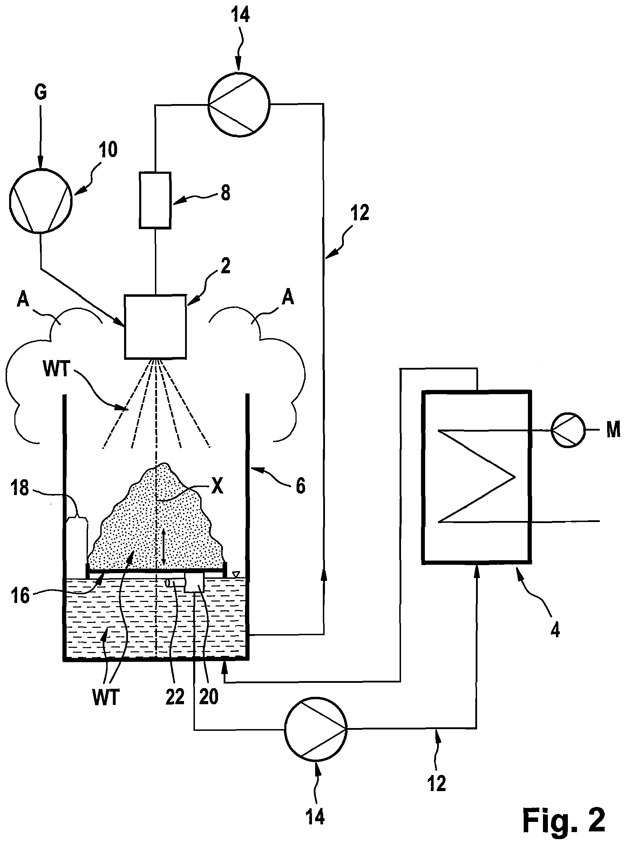

In Fig. 2 ist eine zweite beispielhafte Ausführungsform des erfindungsgemäßen Kühlsystems 1 dargestellt. Zur Vermeidung von Wiederholungen wird zur Beschreibung der Teile des Systems, welche mit denen der vorstehend im Zusammenhang mit Fig. 1 beschriebenen, ersten Ausführungsform identisch sind, auf die Beschreibung der Fig. 1 verwiesen.

Das Kühlsystem 1 gemäß der zweiten Ausführungsform unterscheidet sich dadurch von demjenigen der ersten Ausführungsform, dass es lediglich eine Vorrichtung 6 zur Aufnahme oder zum Lagern des Wärmeträgers WT aufweist. In dieser Aufnahmevorrichtung 6 kann zeitgleich eine Teilmenge des Wärmeträgers WT in flüssigem Aggregatzustand und eine Teilmenge des Wärmeträgers WT in festen Aggregatzustand gelagert werden. Dabei nimmt der obere Teil der Aufnahmevorrichtung 6 den Wärmeträger WT im festen Aggregatzustand (Schnee/Eis) auf, während im unteren Teil der Aufnahmevorrichtung 6 der Wärmeträger WT im flüssigen Aggregatzustand gelagert wird. Die beiden Teilmengen des Wärmeträgers WT in der Aufnahmevorrichtung 6 sind durch eine als horizontal angeordnete Trennwand ausgestaltete Trenneinrichtung 16 getrennt. Diese Trenneinrichtung 16 kann je nach Befüllungsgrad mit dem Wärmeträger WT im flüssigen und festen Zustand entlang einer Achse X beweglich angeordnet sein, welche senkrecht zur flächigen Ausdehnung der Trenneinrichtung 16 angeordnet ist.

Dabei kann die Trenneinrichtung 16 so ausgestaltet sein, dass beim Tauen der Teilmenge des Wärmeträgers WT im festen Zustand (Eis oder Schnee) oberhalb der Trenneinrichtung 16 der abgeschmolzene, flüssige Wärmeträger WT durch einen ringförmigen Durchlaß 18 zwischen der Trenneinrichtung 16 und der seitlichen Behälterwand der Aufnahmevorrichtung 6 durch Schwerkraft in den unteren Bereich der Aufnahmevorrichtung 6 strömen kann, in dem sich die Teilmenge des Wärmeträgers WT im flüssigen Aggregatzustand (Eiswasser) befindet.

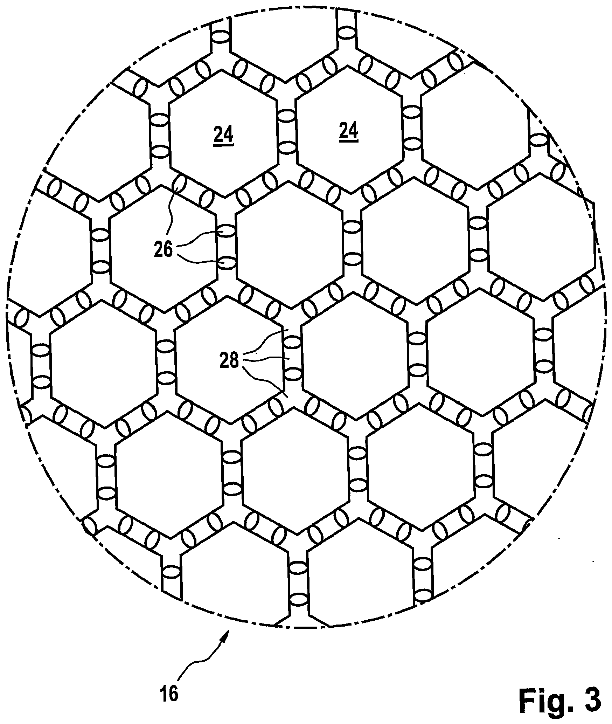

Alternativ hierzu kann die erfindungsgemäße Trenneinrichtung 16 anstelle eines ringförmigen Durchlasses 18 oder zusätzlich hierzu miteinander in Verbindung stehende und/oder miteinander verknüpfte Elemente 24 aufweisen. In einer bevorzugten Ausführungsform sind die Elemente 24 flache Kunststoffplatten mit vorzugsweise dreibis achteckiger, vorzugsweise sechseckiger, insbesondere wabenförmiger, Gestalt (Fig. 3). Dabei können die Elemente miteinander in Verbindung stehen und durch Verbindungselemente 26 miteinander verbunden sein. Dieser Aufbau der Trenneinrichtung 16 aus den vorstehend beschriebenen Elementen macht die Trenneinrichtung 16 beweglich und erlaubt einen Durchtritt bzw. Durchfluß von Abschmelzwasser durch eine oder eine Mehrzahl von zwischen den einzelnen Elementen angeordneten, vorzugsweise schlitzförmigen, Öffnungen 28 wirft. Bei einer mehreckigen, insbesondere sechseckigen, Gestalt der Elemente 24 wird ein Verkannten derselben vorteilhaft vermieden.

Das Kühlsystem 1 weist vorzugsweise eine Einrichtung 20 zum Abziehen des Wärmeträgers WT aus der Aufnahmevorrichtung 6 auf. Dabei weist die Einrichtung 20 wenigstens eine Einlaßöffnung 22 auf, welche an der Trenneinrichtung 16 auf der Seite der Teilmenge des Wärmeträgers WT im flüssigen Aggregatzustand angeordnet ist. Aufgrund der Anomalie des Wassers kann durch die vorstehend beschriebene Anordnung der Einlaßöffnung 22 sichergestellt werden, dass mittels der Einrichtung 20 im Wesentlichen die kälteste zur Verfügung stehende Teilmenge des Wärmeträgers WT im flüssigen Aggregatzustand, also Eiswasser bei ca. 0 °C, aus der Aufnahmevorrichtung 6 abgezogen wird und der bestimmungsgemäßen Verwendung zur Aufnahme von Wärme in der Vorrichtung 4 zum Übertragen von Wärme vom Medium M auf den Wärmeträger WT zugeführt wird. Aufgrund der bekannten Temperaturschichtung beträgt die Temperatur des Wassers am Boden der Aufnahmevorrichtung 6 typischerweise 4 °C. Die Rückführung des in der Vorrichtung 4 erwärmten Wärmeträgers WT in die Aufnahmevorrichtung 6 erfolgt daher auch vorzugsweise an der tiefsten Stelle im Bereich des Bodens der Aufnahmevorrichtung 6.

Um bei der Tröpfchenbildung des Wärmeträgers WT eine möglichst hohe Wärmeabgabe an die Atmosphäre A zu erzielen, wird der flüssige Wärmeträger WT aus der Aufnahmevorrichtung 6 vorzugsweise an der tiefsten Stelle im Bereich des Bodens der Aufnahmevorrichtung 6 entnommen, wo der Wärmeträger Wasser eine Temperatur von etwa 4 °C aufweist. Die Entnahme des Wärmeträgers WT ist jedoch nicht hierauf beschränkt, sondern kann an einer beliebigen Stelle innerhalb der Aufnahmevorrichtung 6 stattfinden.

Erfindungsgemäß kann grundsätzlich die Teilmenge des in der Aufnahmevorrichtung 6 befindlichen Wärmeträgers WT abgezogen und zur Übertragung von Wärme vom Medium M verwendet werden, welche die geringste Temperatur aufweist. Hierdurch werden das Wärmeaufnahmevermögen und damit die Kälteleistungseffizienz insgesamt verbessert.

Darüber hinaus kann grundsätzlich der vom Medium M aufgewärmte Wärmeträger WT an der Stelle in die Aufnahmevorrichtung 6 eingebracht werden, wo sich der Wärmeträger WT mit der höchsten Temperatur befindet.

Die vorstehend beschriebene zweite Ausführungsform des erfindungsgemäßen Kühlsystems 1 kommt daher mit nur einer Aufnahmevorrichtung 6 zum Lagern sowohl der Teilmenge des Wärmeträgers WT im flüssigen Aggregatzustand, als auch der Teilmenge des Wärmeträgers WT im festen Aggregatzustand aus. Zudem wirkt die aufliegende Teilmenge im festen Aggregatzustand isolierend oder sogar kühlend auf die darunter liegende Teilmenge im flüssigen Aggregatzustand. Hierdurch wird bewirkt, daß ein Wärmeträger mit hohem Wärmeaufnahmevermögen über einen langen Zeitraum zur Verfügung gestellt werden kann.

Erfindungsgemäß können herkömmliche Schneekanonen bzw. Schneilanzen als Vorrichtung zur Ausbildung von Tröpfchen des Wärmeträgers verwendet werden, beispielsweise das Modell "SnoTek" oder "NESSy" der Firma Bächler Top Track AG (Auw/Schweiz). Dabei ist der Einsatz von sogenannten Nukleartordüsen zur Erzielung einer optimalen Tröpfchenbildung besonders vorteilhaft.

Vorzugsweise wird, sobald die Atmosphäre A bzw. die Umgebung geeignete Bedingungen aufweist, die Tröpfchen-Bildung und damit die Schnee- bzw. Eiserzeugung kontinuierlich und/oder in voller Auslastung durchgeführt.

Vorzugsweise beträgt die Feuchtkugeltemperatur der Atmosphäre bei der Tröpfchenbildung des Wärmeträgers WT etwa -2 bis -1,5 °C. Hierbei beträgt die Temperatur des Wärmeträgers WT, insbesondere bei Wasser als Wärmeträger WT, vorteilhaft 6 °C oder weniger.

### Betrachtungen zu Energieeffizienz

### Beispiel 1

Mittels des erfindungsgemäßen Kühlsystems 1 wird unter Verwendung von Wasser als Wärmeträger WT und einer oder mehrerer Schneekanonen oder Schneilanzen als Vorrichtung 2 zum Ausbilden von Tröpfchen des Wärmeträgers WT ein Volumenstrom an Schnee von 45,2 m3/h erzeugt (Fallbeispiel mit angenommener Temperatur der Atmosphäre: - 2 °C). Hierzu ist eine elektrische Leistung von 7,5 kW für den Betrieb der Wasserpumpe 8 oder der Wasserpumpen 8 zur Erzeugung des erforderlichen Volumenstroms bzw. des Wasserdrucks erforderlich. Ferner ist eine elektrische Leistung von 4,5 kW zur Erzeugung von Druckluft (etwa 60 L/min bei 8 10⁵ Pa (8 bar)) erforderlich, welche das Versprühen des Wassers und damit die Schneebildung unterstützt. Damit ergibt sich insgesamt eine Schneeerzeugung von 3,77 m³ Schnee/kWh el.

Hieraus berechnet sich die folgende Kälteleistung bei einer angenommenen Dichte des Schnees von 600 kg/m³ und einer Schmelzenthalpie von 335 kJ/kg: 3,77 m³/kWh el. * 600 kg/m³ * 335 kJ/kg = 757.770 kJ/kWh el.

Mit 1 kWh = 3.600 kJ ergibt sich hieraus eine Kälteleistung von etwa 210 kWh/kWh el. Damit ist die Leistungszahl COP 210. Die Leistungszahl COP einer herkömmlichen Kälteanlage ist 3,0 bis 4,2. Damit wird beispielgemäß eine Kälteerzeugungseffizienz erzielt, welche den Faktor 70 bis 50 im Vergleich zu herkömmlichen Kälteanlagen aufweist.

### Beispiel 2

Alternativ oder zusätzlich zum Aggregatzustandwechsel wird eine weitere Kälteleistung durch Verdunstungskühlung erzielt.

Mittels des erfindungsgemäßen Kühlsystems 1 wird unter Verwendung von Wasser als Wärmeträger WT und einer Schneekanone oder Schneilanze als Vorrichtung 2 zum Ausbilden von Tröpfchen des Wärmeträgers WT ein Volumenstrom des Wassers von 27,1 m3/h erzeugt. Hierzu ist eine elektrische Leistung von 7,5 kW für den Betrieb der Wasserpumpe zur Erzeugung des erforderlichen Volumenstroms bzw. des Wasserdrucks erforderlich. In diesem Beispiel wird keine Druckluft zum Ausbilden von Tröpfchen des Wassers durch Versprühen verwendet. Damit ergibt sich insgesamt eine Volumenausbeute an versprühtem Wasser von 3,61 m³/kWh el. = 3.610 kg/kWh el.

Durch den Kontakt mit der Atmosphäre A findet eine Abkühlung der Wassertröpfchen durch Verdunsten eines Teils des Wassers und damit ein Wärmeübergang in die Atmosphäre A statt, wenn die Luft- und Feuchtkugeltemperatur der Atmosphäre A kleiner als die Temperatur des Wassers ist. In diesem Beispiel wird eine Temperaturabnahme des versprühten Wassers von 10 K erzielt.

Daraus ergibt sich bezogen auf eine eingesetzte elektrische Energie von 1 kWh eine Wärmemenge von Q = m * c * dT = 3.610 kg * 4,18 kJ/kgK * 10 K = 150.898 kJ.

Mit 1 kWh = 3.600 kJ ergeben sich hieraus eine Kühl- bzw. Kälteleistung von etwa 41,9 kWh/kWh el. Damit ist die Leistungszahl COP bezogen allein auf die Abkühlung etwa 41,9. Die Leistungszahl COP einer herkömmlichen Kälteanlage ist im Bereich von etwa 3,0 bis 4,2. Damit wird beispielgemäß eine Kälteerzeugungseffizienz erzielt, welche den Faktor 10 bis 14 im Vergleich zu herkömmlichen Kälteanlagen aufweist.

Die erfindungsgemäße Tröpfchenbildung des Wärmeträgers WT ohne Aggregatzustandswechsel und insbesondere das in Beispiel 2 beschriebene Verfahren kann vorteilhaft auch zum Vorkühlen des Wärmeträgers WT auf eine geringere Temperatur von beispielsweise kleiner 6 °C verwendet werden. Hierdurch läßt sich eine Tröpfchenbildung mit Aggregatzustandswechsel des Wärmeträgers WT schneller und einfacher erreichen. Insbesondere kann eine anderweitige Vorkühlung des Wärmeträgers WT entfallen. Bei modernen Schneekanonen bzw. Schneilanzen ist eine Schnee- bzw. Eisbildung bereits bei Wassertemperaturen von unter 6 °C möglich.

Umfangreiche Berechnungen der Erfinder haben ergeben, dass die mittels des erfindungsgemäßen Verfahrens bzw. Kühlsystems in Mitteleuropa während eines durchschnittlichen Winters erzeugbare Menge an Schnee bzw. Eis bei weitem ausreicht, um beispielsweise den jährlichen Kältebedarf einer mittelständischen bis großen Brauerei zu decken.

## Patentansprüche

1. Verfahren zum Übertragen von Wärme aus einem Medium (M) auf einen Wärmeträger (WT) in einem Verfahren zur Lebensmittelherstellung, vorzugsweise bei der Getränkeherstellung, insbesondere bei der Bierherstellung, mit den Schritten:
(a) Bereitstellen des Wärmeträgers (WT);
wobei der Wärmeträger (WT) einen im flüssigen Aggregatzustand vorliegenden Fluidbestandteil (FB) aufweist;
wobei der Fluidbestandteil (FB) Wasser ist;
(b) Ausbilden von Tröpfchen des Wärmeträgers (WT) in einer Atmosphäre (A) mittels einer zum Ausbilden von Tröpfchen geeigneten Vorrichtung (2);
wobei die Atmosphäre (A) gasförmig ist;
wobei der Wärmeträger (WT) Wärme an die Atmosphäre (A) abgibt;
wobei der Fluidbestandteil (FB) des Wärmeträgers (WT) oder ein Teil des Fluidbestandteils (FB) beim oder nach dem Ausbilden der Tröpfchen in den festen Aggregatzustand übergeht; und
(c) Inkontaktbringen des Wärmeträgers (WT) mit dem Medium (M);
wobei Wärme vom Medium (M) auf den Wärmeträger (WT) übertragen wird.

2. Verfahren nach Anspruch 1, **dadurch gekennzeichnet, dass** der Wärmeträger (WT) unmittelbar vor dem Ausbilden der Tröpfchen oder unmittelbar vor der zum Ausbilden der Tröpfchen geeigneten Vorrichtung (2) eine Temperatur (T_{WT}) im Bereich von - 10 bis 10 °C, vorzugsweise - 1 bis 8,5 °C, vorzugsweise - 1 bis 6,5 °C, vorzugsweise 0 bis 6,5 °C, insbesondere 0 bis 6 °C, aufweist.

3. Verfahren nach Anspruch 1 oder 2, **dadurch gekennzeichnet, dass** der Wärmeträger (WT) unmittelbar vor dem Ausbilden der Tröpfchen oder unmittelbar vor der zum Ausbilden der Tröpfchen geeigneten Vorrichtung (2) einen Druck (p_{WT}) in einem Bereich von 4·10⁵ bis 60·10⁵ Pa, vorzugsweise 5·10⁵ bis 20·10⁵ Pa, vorzugsweise 6·10⁵ bis 10·10⁵ Pa, insbesondere 6,5·10⁵ bis 8,5·10⁵ Pa, aufweist; und/oder
wobei die Atmosphäre (A) beim Ausbilden der Tröpfchen einen Druck (p_{A}) in einem Bereich von 0,3·10⁵ bis 1,2·10⁵ Pa, vorzugsweise 0,5·10⁵ bis 1,15·10⁵ Pa, vorzugsweise 0,9·10⁵ bis 1,10·10⁵ Pa, insbesondere 0,95·10⁵ bis 1,05·10⁵ Pa, aufweist.

4. Verfahren nach wenigstens einem der Ansprüche 1 bis 3, **dadurch gekennzeichnet, dass** die Atmosphäre (A) eine Feuchtkugeltemperatur (FKT) in einem Bereich von - 50 bis 0 °C, vorzugsweise von - 20 bis - 1 °C, insbesondere von - 8 bis - 1,5 °C, aufweist.

5. Verfahren nach wenigstens einem der Ansprüche 1 bis 4, **dadurch gekennzeichnet, dass** der Fluidbestandteil (FB) des Wärmeträgers (WT) nach dem Inkontaktbringen mit dem Medium (M) und der Wärmeaufnahme teilweise oder vollständig im flüssigen Aggregatzustand vorliegt.

6. Verfahren nach wenigstens einem der Ansprüche 1 bis 5, **dadurch gekennzeichnet, dass** das Ausbilden von Tröpfchen des Wärmeträgers (WT) unter Verwendung eines Gases (G) durchgeführt wird;
wobei das Gas (G) vorzugsweise einen Druck (p_{G}) in einem Bereich von 4·10⁵ bis 12·10⁵ Pa, vorzugsweise 6·10⁵ bis 10·10⁵ Pa, vorzugsweise 7·10⁵ bis 9·10⁵ Pa, insbesondere 7,5·10⁵ bis 8,5·10⁵ Pa, aufweist; und/oder
wobei das Gas (G) vorzugsweise der Atmosphäre (A) entnommen ist.

7. Kühlsystem (1) zum Übertragen von Wärme aus einem Medium (M) auf einen Wärmeträger (WT) in einem Verfahren zur Lebensmittelherstellung, vorzugsweise bei der Getränkeherstellung, insbesondere bei der Bierherstellung, vorzugsweise zum Durchführen des Verfahrens nach wenigstens einem der Ansprüche 1 bis 6;
wobei der Wärmeträger (WT) einen Fluidbestandteil (FB) aufweist;
wobei der Fluidbestandteil (FB) Wasser ist;
wobei das Kühlsystem (1) wenigstens aufweist:
eine Atmosphäre (A), welche gasförmig ist;
eine Vorrichtung (2) zum Ausbilden von Tröpfchen des Wärmeträgers (WT);
wobei die Vorrichtung (2) zum Ausbilden von Tröpfchen des Wärmeträgers (WT) derart im Kühlsystem (1) angeordnet ist, dass die Tröpfchen in der Atmosphäre (A) ausbildbar sind oder die Tröpfchen nach derer Ausbildung in die Atmosphäre (A) überführbar sind; und
eine Vorrichtung (4) zum Übertragen von Wärme vom Medium (M) auf den Wärmeträger (WT);
wobei die Atmosphäre (A) wenigstens während des Ausbildens der Tröpfchen des Wärmeträgers (WT) ein Teil der Lufthülle der Erde ist oder der Lufthülle der Erde entnommen ist oder mit der Lufthülle der Erde in Fluidverbindung steht;
wobei das Kühlsystem (1) geeignet ist, den Fluidbestandteil (FB) des Wärmeträgers (WT) oder einen Teil des Fluidbestandteils (FB) in den festen Aggregatzustand zu überführen.

8. Kühlsystem nach Anspruch 7, **dadurch gekennzeichnet, dass** das Kühlsystem (1) ferner eine Vorrichtung (8) zum Einstellen eines Drucks (p_{WT}) des Wärmeträgers (WT), vorzugsweise eines Drucks (p_{WT}) des Wärmeträgers (WT) in der Vorrichtung (2) zum Ausbilden der Tröpfchen des Wärmeträgers (WT), aufweist.

9. Kühlsystem nach Anspruch 7 oder 8, **dadurch gekennzeichnet, dass** das Kühlsystem (1) ferner eine Vorrichtung (10) zum Einstellen eines Drucks (p_{G}) eines Gases (G), vorzugsweise ein Gebläse oder ein Verdichter, aufweist, vorzugsweise auf einen Druck (p_{G}) in einem Bereich von 4·10⁵ bis 12·10⁵ Pa, vorzugsweise 6·10⁵ bis 10·10⁵ Pa, vorzugsweise 7·10⁵ bis 9·10⁵ Pa, insbesondere 7,5·10⁵ bis 8,5·10⁵ Pa,
wobei das Gas (G) vorzugsweise der Atmosphäre (A) entnommen ist; und
wobei das Gas (G) der Vorrichtung (2) zum Ausbilden der Tröpfchen des Wärmeträgers (WT) zuführbar ist.

10. Kühlsystem nach wenigstens einem der Ansprüche 7 bis 9, **dadurch gekennzeichnet, dass** das Kühlsystem (1) ferner wenigstens eine Vorrichtung (6) zur Aufnahme oder zum Lagern der Gesamtmenge oder einer Teilmenge des Wärmeträgers (WT), vorzugsweise einen ersten Behälter (61) zur Aufnahme des Wärmeträgers (WT) nach der Wärmeabgabe und/oder einen zweiten Behälter (62) zur Aufnahme des Wärmeträgers (WT) nach der Wärmeaufnahme, aufweist,
wobei die Vorrichtung (6) zur Aufnahme oder zum Lagern des Wärmeträgers (WT) vorzugsweise Umfangsflächen aufweist, die zur Umgebung hin wärmegedämmt sind.

11. Kühlsystem nach Anspruch 10, **dadurch gekennzeichnet, dass** das Kühlsystem (1) ferner eine Einrichtung (20) zum Abziehen des Wärmeträgers (WT) aus der Vorrichtung (6) zur Aufnahme oder zum Lagern der Gesamtmenge oder einer Teilmenge des Wärmeträgers (WT), vorzugsweise dem ersten Behälter (61), aufweist;
wobei wenigstens eine Einlaßöffnung (22) der Einrichtung (20) zum Abziehen des Wärmeträgers (WT) im Bereich der Trenneinrichtung (16), vorzugweise an der Trenneinrichtung (16), insbesondere an der Trenneinrichtung (16) auf der Seite der Teilmenge des Wärmeträgers (WT) im flüssigen Aggregatzustand, angeordnet ist.

12. Verwendung eines nach Schritt (b) des Verfahrens gemäß Anspruch 1 erhaltenen Wärmeträgers (WT) zum Übertragen von Wärme aus einem Medium (M) auf den Wärmeträger (WT) in einem Verfahren zur Lebensmittelherstellung, vorzugsweise bei der Getränkeherstellung, insbesondere bei der Bierherstellung.

13. Verwendung einer Vorrichtung (2) zum Ausbilden von Tröpfchen eines Wärmeträgers (WT) in einer Atmosphäre (A) und zum Überführen eines Fluidbestandteils (FB) des Wärmeträgers (WT) oder eines Teils des Fluidbestandteils (FB) des Wärmeträgers (WT) in den festen Aggregatzustand, in einem Kühlsystem (1) zur Übertragung von Wärme von einem Medium (M) auf den Wärmeträger (WT) in einem Verfahren zur Lebensmittelherstellung, vorzugsweise bei der Getränkeherstellung, insbesondere bei der Bierherstellung, und/oder zur Durchführung des Verfahrens nach wenigstens einem der Ansprüche 1 bis 6;
wobei der Fluidbestandteil (FB) Wasser ist.

14. Verwendung eines Kühlsystems (1) nach wenigstens einem der Ansprüche 7 bis 11 zum Übertragen von Wärme von einem Medium (M) auf einen Wärmeträger (WT) in einem Verfahren zur Lebensmittelherstellung, vorzugsweise bei der Getränkeherstellung, insbesondere bei der Bierherstellung, und/oder zur Durchführung des Verfahrens nach wenigstens einem der Ansprüche 1 bis 6;
wobei der Wärmeträger (WT) einen Fluidbestandteil (FB) aufweist;
wobei der Fluidbestandteil (FB) Wasser ist.

15. Verwendung eines Wärmeträgers (WT) zum Übertragen von Wärme aus einem Medium (M) auf den Wärmeträger (WT) in einem Verfahren zur Lebensmittelherstellung, vorzugsweise bei der Getränkeherstellung, insbesondere bei der Bierherstellung,
wobei der Wärmeträger (WT) einen Fluidbestandteil (FB) aufweist;
wobei der Fluidbestandteil (FB) Wasser ist;
wobei der Wärmeträger (WT) vor der Aufnahme der Wärme aus dem Medium (M) Wärme an eine Atmosphäre (A) bei oder nach Ausbilden von Tröpfchen des Wärmeträgers (WT) in der Atmosphäre (A) abgegeben hat;
wobei die Atmosphäre (A) gasförmig ist; und
wobei bei der Wärmeabgabe an die Atmosphäre (A) der Fluidbestandteil (FB) des Wärmeträgers (WT) oder ein Teil des Fluidbestandteils (FB) beim oder nach dem Ausbilden der Tröpfchen in den festen Aggregatzustand übergegangen ist.

## Claims

1. Method for transferring heat from a medium (M) to a heat carrier (WT) in a method for food manufacturing, preferably for beverage manufacturing, in particular for beer manufacturing, comprising the steps:
(a) Providing the heat carrier (WT);
wherein the heat carrier (WT) comprises a fluid component (FB), which is present in the liquid state of aggregation;
wherein the fluid component (FB) is water;
(b) Forming of droplets of the heat carrier (WT) in an atmosphere (A) by means of a device (2) suitable for forming of droplets;
wherein the atmosphere (A) is gaseous;
wherein the heat carrier (WT) releases heat to the atmosphere (A);
wherein the fluid component (FB) of the heat carrier (WT) or a part of the fluid component (FB) changes into the solid state of aggregation during or after the formation of the droplets; and
(c) Bringing the heat carrier (WT) in contact with the medium (M);
wherein heat is transferred from the medium (M) to the heat carrier (WT).

2. Method according to claim 1, **characterized in that** the heat carrier (WT) has a temperature (T_{WT}) in the range of - 10 to 10 °C, preferably - 1 to 8.5 °C, preferably - 1 to 6.5 °C, preferably 0 to 6.5 °C, in particular 0 to 6 °C, directly prior to the formation of the droplets or directly before the device (2) suitable for forming of droplets.

3. Method according to claim 1 or 2, **characterized in that** the heat carrier (WT) has a pressure (p_{WT}) in a range of 4·10⁵ to 60·10⁵ Pa, preferably 5·10⁵ to 20·10⁵ Pa, preferably 6·10⁵ to 10·10⁵ Pa, in particular 6.5·10⁵ to 8.5·10⁵ Pa, directly prior to the formation of the droplets or directly before the device (2) suitable for forming of droplets; and/or
wherein the atmosphere (A) has a pressure (p_{A}) in the range of 0.3·10⁵ to 1.2·10⁵ Pa, preferably 0.5·10⁵ to 1.15·10⁵ Pa, preferably 0.9·10⁵ to 1.10·10⁵ Pa, in particular 0.95·10⁵ to 1.05·10⁵ Pa, during the formation of the droplets.

4. Method according to at least one of claims 1 to 3, **characterized in that** the atmosphere (A) has a heat bulb temperature (FKT) in a range of - 50 to 0 °C, preferably from - 20 to - 1 °C, in particular from - 8 to - 1.5 °C.

5. Method according to at least one of claims 1 to 4, **characterized in that** the fluid component (FB) of the heat carrier (WT) is present partly or completely in the liquid state of aggregation after bringing it in contact with the medium (M) and the absorption of heat.

6. Method according to at least one of claims 1 to 5, **characterized in that** the formation of droplets of the heat carrier (WT) is carried out by use of a gas (G);
wherein the gas (G) preferably has a pressure (p_{G}) in a range of 4·10⁵ to 12·10⁵ Pa, preferably 6·10⁵ to 10·10⁵ Pa, preferably 7·10⁵ to 9·10⁵ Pa, in particular 7.5·10⁵ to 8.5·10⁵ Pa; and/or
wherein the gas (G) preferably is taken from the atmosphere (A).

7. Cooling system (1) for transferring of heat from a medium (M) to a heat carrier (WT) in a method for food manufacturing, preferably for beverage manufacturing, in particular for beer manufacturing, preferably for carrying out the method according to at least one of claims 1 to 6;
wherein the heat carrier (WT) comprises a fluid component (FB);
wherein the fluid component (FB) is water;
wherein the cooling system (1) at least comprises:
an atmosphere (A), which is gaseous;
a device (2) for the formation of droplets of the heat carrier (WT);
wherein the device (2) for the formation of droplets of the heat carrier (WT) is arranged in the cooling system (1), such that the droplets are formable in the atmosphere (A) or after their formation, the droplets are transferable into the atmosphere (A); and
a device (4) for transferring of heat from the medium (M) to the heat carrier (WT);
wherein, at least during the formation of the droplets of the heat carrier (WT), the atmosphere (A) is a part of the atmosphere of the earth or is obtained from the atmosphere of the earth or is in fluid connection with the atmosphere of the earth;
wherein the cooling system (1) is suitable to change the fluid component (FB) of the heat carrier (WT) or a part of the fluid component (FB) into the solid state of aggregation.

8. Cooling system according to claim 7, **characterized in that** the cooling system (1) further comprises a device (8) for setting a pressure (p_{WT}) of the heat carrier (WT), preferably a pressure (pw_{T}) of the heat carrier (WT) in the device (2) for formation of droplets of the heat carrier (WT).

9. Cooling system according to claim 7 or 8, **characterized in that** the cooling system (1) further comprises a device (10) for setting a pressure (p_{G}) of a gas (G), preferably a blower or a compressor,
preferably to a pressure (p_{G}) in the range of 4·10⁵ to 12·10⁵ Pa, preferably 6·10⁵ to 10·10⁵ Pa, preferably 7·10⁵ to 9·10⁵ Pa, in particular 7.5·10⁵ to 8.5·10⁵ Pa,
wherein the gas (G) preferably is obtained from the atmosphere (A); and wherein the gas (G) is supplyable to the device (2) for forming of droplets of the heat carrier (WT).

10. Cooling system according to at least one of claims 7 to 9, **characterized in that** the cooling system (1) further comprises at least one device (6) for receiving or storing the total amount or a partial amount of the heat carrier (WT), preferably a first container (61) for receiving the heat carrier (WT) after the heat release and/or a second container (62) for receiving the heat carrier (WT) after the heat absorption;
wherein the device (6) for receiving or storing the heat carrier (WT) preferably has peripheral surface areas, which are heat insulated to the ambient.

11. Cooling system according to claim 10, **characterized in that** the cooling system (1) further comprises a device (20) for discharging the heat carrier (WT) from the device (6) for receiving or storing the total amount or a partial amount of the heat carrier (WT), preferably the first container (61); wherein at least one inlet opening (22) of the device (20) for discharging the heat carrier (WT) is arranged in the area of the separator device (16), preferably at the separator device (16), in particular at the separator device (16) on the side of the partial amount of the heat carrier (WT) being present in the liquid state of aggregation.

12. Use of a heat carrier (WT) as obtained from step (b) of the method according to claim 1, for transferring of heat from a medium (M) to the heat carrier (WT) in a method for food manufacturing, preferably beverage manufacturing, in particular beer manufacturing.

13. Use of a device (2) for forming of droplets of a heat carrier (WT) in an atmosphere (A) and for changing a fluid component (FB) of the heat carrier (WT) or a part of the fluid component (FB) of the heat carrier (WT) into the solid state of aggregation, in a cooling system (1) for transferring of heat from a medium (M) to the heat carrier (WT) in a method for food manufacturing, preferably for beverage manufacturing, in particular for beer manufacturing, and/or for carrying out the method according to at least one of claims 1 to 6;
wherein the fluid component (FB) is water.

14. Use of a cooling system (1) according to at least one of claims 7 to 11 for transferring of heat from a medium (M) to a heat carrier (WT) in a method for food manufacturing, preferably for beverage manufacturing, in particular for beer manufacturing; and/or for carrying out the method according to at least one of claims 1 to 6;
wherein the heat carrier (WT) comprises a fluid component (FB);
wherein the fluid component (FB) is water.

15. Use of a heat carrier (WT) for transferring of heat from a medium (M) to a heat carrier (WT) in a method for food manufacturing, preferably for beverage manufacturing, in particular for beer manufacturing,
wherein the heat carrier (WT) comprises a fluid component (FB);
wherein the fluid component (FB) is water;
wherein the heat carrier (WT) has released heat to an atmosphere (A) during or after forming of droplets of the heat carrier (WT) in the atmosphere (A), prior to absorbing of heat from the medium (M);
wherein the atmosphere (A) is gaseous; and
wherein during the heat release to the atmosphere (A), the fluid component (FB) of the heat carrier (WT) or a part of the fluid component (FB) has changed into the solid state of aggregation during or after the formation of the droplets.

## Revendications

1. Procédé servant au transfert de chaleur provenant d'un milieu (M) sur un agent caloporteur (WT) dans un procédé de production de denrées alimentaires, de préférence dans le cadre de la production de boissons, en particulier dans le cadre de la production de bière, comprenant les étapes consistant à :
(a) fournir l'agent caloporteur (WT),
dans lequel l'agent caloporteur (WT) présente un constituant fluide (FB) se trouvant dans un état physique liquide,
dans lequel le constituant fluide (FB) est de l'eau ;
(b) réaliser des gouttelettes de l'agent caloporteur (WT) dans une atmosphère (A) au moyen d'un dispositif (2) adapté pour réaliser des gouttelettes,
dans lequel l'atmosphère (A) est sous forme gazeuse,
dans lequel l'agent caloporteur (WT) émet de la chaleur dans l'atmosphère (A),
dans lequel le constituant fluide (FB) de l'agent caloporteur (WT) ou une partie du constituant fluide (FB) passe dans l'état physique solide lors de ou après la réalisation des gouttelettes :
(c) mettre en contact l'agent caloporteur (WT) avec le milieu (M),
dans lequel la chaleur provenant du milieu (M) est transférée sur l'agent caloporteur (WT).

2. Procédé selon la revendication 1, **caractérisé en ce que** l'agent caloporteur (WT) présente directement avant la réalisation des gouttelettes ou directement avant le dispositif (2) adapté pour la réalisation des gouttelettes, une température (T_{WT}) située dans la plage allant de -10 °C à 10 °C, de préférence de -1 à 8,5 °C, de préférence de -1 à 6,5 °C, de préférence de 0 à 6,5 °C, en particulier de 0 à 6 °C.

3. Procédé selon la revendication 1 ou 2, **caractérisé en ce que** l'agent caloporteur (WT) présente, directement avant la réalisation des gouttelettes ou directement avant le dispositif (2) adapté pour la réalisation des gouttelettes, une pression (p_{WT}) située dans la plage allant de 4·10⁵ à 60·10⁵ Pa, de préférence de 5·10⁵ à 20·10⁵ Pa, de préférence de 6·10⁵ à 10·10⁵, en particulier de 6,5·10⁵ à 8,5·10⁵ Pa, et/ou
dans lequel l'atmosphère (A) présente lors de la réalisation des gouttelettes une pression (p_{A}) située dans la plage allant de 0,3·10⁵ à 1,2·10⁵, de préférence allant de 0,5·10⁵ à 1,15·10⁵ Pa, de préférence de 0,9·10⁵ à 1,10·10⁵, en particulier allant de 0,95·10⁵ à 1,05·10⁵ Pa.

4. Procédé selon au moins l'une quelconque des revendications 1 à 3, **caractérisé en ce que** l'atmosphère (A) présente une température de bulbe humide (FKT) située dans la plage allant de -50 à 0 °C, de préférence allant de -20 à -1 °C, en particulier allant de -8 à -1,5 °C.

5. Procédé selon au moins l'une quelconque des revendications 1 à 4, **caractérisé en ce que** le constituant fluide (FB) de l'agent caloporteur (WT) est présent en partie ou en totalité dans l'état physique liquide après la mise en contact avec le milieu (M) et après l'absorption de chaleur.

6. Procédé selon au moins l'une quelconque des revendications 1 à 5, **caractérisé en ce que** la réalisation de gouttelettes de l'agent caloporteur (WT) est mise en oeuvre en utilisant un gaz (G),
dans lequel le gaz (G) présente de préférence une pression (p_{G}) située dans la plage allant de 4·10⁵ à 12·10⁵ Pa, de préférence allant de 6·10⁵ à 10·10⁵ Pa, de préférence allant de 7·10⁵ à 9·10⁵ Pa, en particulier allant de 7,5·10⁵ à 8,5·10⁵ Pa, et/ou
dans lequel le gaz (G) est de préférence prélevé de l'atmosphère (A).

7. Système de refroidissement (1) servant au transfert de chaleur provenant d'un milieu (M) sur un agent caloporteur (WT) dans un procédé servant à la production de denrées alimentaires, de préférence lors de la production de boissons, en particulier lors de la production de bière, servant à mettre en oeuvre de préférence le procédé selon au moins l'une quelconque des revendications 1 à 6,
dans lequel l'agent caloporteur (WT) présente un constituant fluide (FB),
dans lequel le constituant fluide (FB) est de l'eau,
dans lequel le système de refroidissement (1) présente au moins :
une atmosphère (A), qui est sous forme gazeuse,
un dispositif (2) servant à réaliser des gouttelettes de l'agent caloporteur (WT),
dans lequel le dispositif (2) servant à réaliser des gouttelettes de l'agent caloporteur (WT) est disposé de telle manière dans le système de refroidissement (1) que les gouttelettes peuvent être réalisées dans l'atmosphère (A) ou que les gouttelettes peuvent être amenées dans l'atmosphère (A) après leur réalisation, et
un dispositif (4) servant au transfert de chaleur depuis le milieu (M) sur l'agent caloporteur (WT),
dans lequel l'atmosphère (A) est au moins pendant la réalisation des gouttelettes de l'agent caloporteur (WT) une partie de l'atmosphère terrestre ou est prélevée de l'atmosphère terrestre ou est en communication fluidique avec l'atmosphère terrestre,
dans lequel le système de refroidissement (1) est adapté pour transférer le constituant fluide (FB) de l'agent caloporteur (WT) ou une partie du constituant fluide (FB) dans l'état physique solide.

8. Système de refroidissement selon la revendication 7, **caractérisé en ce que** le système de refroidissement (1) présente en outre un dispositif (8) servant à régler une pression (p_{WT}) de l'agent caloporteur (WT), de préférence une pression (p_{WT}) de l'agent caloporteur (WT) dans le dispositif (2) servant à réaliser les gouttelettes de l'agent caloporteur (WT).

9. Système de refroidissement selon la revendication 7 ou 8, **caractérisé en ce que** le système de refroidissement (1) présente en outre un dispositif (10) servant à régler une pression (p_{G}) d'un gaz (G), de préférence une soufflante ou un compresseur,
de préférence sur une pression (p_{G}) située dans une plage allant de 4·10⁵ à 12·10⁵ Pa, de préférence de 6·10⁵ à 10·10⁵ Pa, de préférence de 7·10⁵ à 9·10⁵ Pa, en particulier de 7,5·10⁵ à 8,5·10⁵ Pa,
dans lequel le gaz (G) est prélevé de préférence de l'atmosphère (A), et
dans lequel le gaz (G) peut être conduit au dispositif (2) servant à réaliser les gouttelettes de l'agent caloporteur (WT).

10. Système de refroidissement selon au moins l'une quelconque des revendications 7 à 9, **caractérisé en ce que** le système de refroidissement (1) présente en outre au moins un dispositif (6) servant à absorber ou à stocker la quantité totale ou une quantité partielle de l'agent caloporteur (WT), de préférence un premier contenant (61) servant à recevoir l'agent caloporteur (WT) après la dissipation de chaleur et/ou un deuxième contenant (62) servant à recevoir l'agent caloporteur (WT) après l'absorption de chaleur,
dans lequel le dispositif (6) servant à recevoir ou à stocker l'agent caloporteur (WT) présente de préférence des surfaces périphériques, qui sont isolées thermiquement par rapport à l'extérieur.

11. Système de refroidissement selon la revendication 10, **caractérisé en ce que** le système de refroidissement (1) présente en outre un équipement (20) servant à retirer l'agent caloporteur (WT) du dispositif (6) servant à recevoir ou à stocker la quantité totale ou une quantité partielle de l'agent caloporteur (WT), de préférence du premier contenant (61),
dans lequel au moins une ouverture d'entrée (22) de l'équipement (20) servant à retirer l'agent caloporteur (WT) est disposée dans la zone de l'équipement de séparation (16), de préférence au niveau de l'équipement de séparation (16), en particulier au niveau de l'équipement de séparation (16) sur le côté de la quantité partielle de l'agent caloporteur (WT) dans l'état physique liquide.

12. Utilisation d'un agent caloporteur (WT) obtenu après l'étape (b) du procédé selon la revendication 1, servant au transfert de chaleur depuis un milieu (M) sur l'agent caloporteur (WT) dans un procédé servant à la production de denrées alimentaires, de préférence lors de la production de boissons, en particulier lors de la production de bière.

13. Utilisation d'un dispositif (2) servant à réaliser des gouttelettes d'un agent caloporteur (WT) dans une atmosphère (A) et servant à amener un constituant fluide (FB) de l'agent caloporteur (WT) ou une partie du constituant fluide (FB) de l'agent caloporteur (WT) dans l'état physique solide, dans un système de refroidissement (1) servant au transfert de chaleur depuis un milieu (M) sur l'agent caloporteur (WT) dans un procédé servant à la production de denrées alimentaires, de préférence lors de la production de boissons, en particulier lors de la production de bière, et/ou servant à mettre en oeuvre le procédé selon au moins l'une quelconque des revendications 1 à 6,
dans laquelle le constituant fluide (FB) est de l'eau.

14. Utilisation d'un système de refroidissement (1) selon au moins l'une quelconque des revendications 7 à 11 servant au transfert de chaleur depuis un milieu (M) sur un agent caloporteur (WT) dans un procédé servant à la production de denrées alimentaires, de préférence lors de la production de boissons, en particulier lors de la production de bière, et/ou servant à mettre en oeuvre le procédé selon au moins l'une quelconque des revendications 1 à 6,
dans laquelle l'agent caloporteur (WT) présente un constituant fluide (FB),
dans laquelle le constituant fluide (FB) est de l'eau.

15. Utilisation d'un agent caloporteur (WT) servant au transfert de chaleur provenant d'un milieu (M) sur l'agent caloporteur (WT) dans un procédé servant à la production de denrées alimentaires, de préférence lors de la production de boissons, en particulier lors de la production de bière,
dans laquelle l'agent caloporteur (WT) présente un constituant fluide (FB),
dans laquelle le constituant fluide (FB) est de l'eau,
dans laquelle l'agent caloporteur (WT) a dissipé avant l'absorption de la chaleur provenant du milieu (M) de la chaleur dans l'atmosphère (A) lors de ou après la réalisation de gouttelettes de l'agent caloporteur (WT) dans l'atmosphère (A),
dans laquelle l'atmosphère (A) est sous forme gazeuse, et
dans laquelle lors de la dissipation de chaleur dans l'atmosphère (A), le constituant fluide (FB) de l'agent caloporteur (WT) ou une partie du constituant fluide (FB) est amené(e) dans l'état physique solide lors de la réalisation des gouttelettes ou après la réalisation des gouttelettes.
